# EUROPÄISCHE PATENTSCHRIFT

(11) **EP 4 384 352 B1**
(45) Veröffentlichungstag und Bekanntmachung des Hinweises auf die Patenterteilung: **03.09.2025**
(21) Anmeldenummer: 22764764.1
(22) Anmeldetag: 12.08.2022
(51) Int. Cl.: B25J 9/00, A47L 5/36

(54) **ELEKTRISCH BETREIBBARES GERÄT UND VERFAHREN**
ELECTRICALLY OPERABLE APPARATUS AND METHOD
APPAREIL À COMMANDE ÉLECTRIQUE ET PROCÉDÉ

(30) Priorität: 13.08.2021 DE 102021208904
(43) Veröffentlichungstag der Anmeldung: 19.06.2024
(73) Patentinhaber: Festool GmbH, 73240 Wendlingen am Neckar (DE)
(72) Erfinder: WEIDNER, Robert, 29581 Bohlsen (DE); ARGUBI-WOLLESEN, Andreas, 20146 Hamburg (DE); OTTEN, Bernward, 20099 Hamburg (DE); ENDER, Dominic Richard, 72622 Nürtingen (DE); HIPP, Björn, 22307 Hamburg (DE)
(74) Vertreter: Patentanwälte Magenbauer & Kollegen Partnerschaft mbB
(86) Internationale Anmeldenummer: PCT/EP2022/072715
(87) Internationale Veröffentlichungsnummer: WO 2023/017172

(56) Entgegenhaltungen:
- WO-A1-2017/127683
- DE-A1- 102016 112 420
- DE-A1- 102018 206 823
- US-A- 5 813 088
- US-A1- 2014 277 739
- US-A1- 2021 177 686

## Beschreibung

Die Erfindung betrifft ein elektrisch betreibbares Gerät, das als Exoskelett ausgeführt ist, umfassend einen Basisabschnitt zur Anbringung an einen Körperabschnitt, insbesondere den Torso, des menschlichen Körpers, eine Aktor- und/oder Antriebsvorrichtung und eine Steuereinrichtung zur Ansteuerung der Aktor- und/oder Antriebseinrichtung. Das elektrisch betreibbare Gerät umfasst einen beweglich mit dem Basisabschnitt gekoppelten Unterstützungsabschnitt zur Unterstützung eines Körperteils, vorzugsweise einer Gliedmaße, insbesondere eines Arms, des menschlichen Körpers und die Aktor- und/oder Antriebseinrichtung ist eine auf den Unterstützungsabschnitt wirkende, insbesondere pneumatische, Aktoreinrichtung zur Bereitstellung einer Unterstützungskraft für den Körperteil.

Aus der WO2019072444A2 sind Exoskelette sowie Verfahren zur Steuerung der Unterstützungskraft eines Exoskeletts auf Grundlage der Signale eines Kraftsensors bekannt.

Die US 2021/177686 A1 beschreibt ein Bein-Exoskelett für Skifahrer. An einem Rucksackgurt ist ein Bedienelement angeordnet, mit dem das Exoskelett ein- und ausgeschaltet werden kann.

Die US 2014/277739 A1 betrifft einen Exosuit mit einer Benutzerschnittstelle.

Eine Aufgabe der Erfindung besteht darin, ein einfach zu bedienendes, als Exoskelett ausgeführtes, elektrisch betreibbares Gerät bereitzustellen.

Die Aufgabe wird gelöst durch ein elektrisch betreibbares Gerät nach Anspruch 1. Das als Exoskelett ausgeführte, elektrisch betreibbare Gerät umfasst ein Bedienelement, das für eine Anwendereingabe in die Steuereinrichtung dient und das vom Anwender des elektrisch betreibbaren Geräts während der Verwendung des elektrisch betreibbaren Geräts händisch bedienbar ist. Das Bedienelement verfügt über ein Pause-Eingabeelement, über das das Exoskelett in einen Pause-Zustand versetzbar ist, in dem die Unterstützungskraft abgeschaltet ist und das Exoskelett weiterhin eingeschaltet ist.

Das elektrisch betreibbare Gerät ist als Exoskelett ausgeführt. Der Anwender des Exoskeletts kann das Bedienelement bequem während der Nutzung des Exoskeletts verwenden. Dies heißt insbesondere, dass der Anwender das Bedienelement bei der Nutzung des Exoskeletts bequem erreichen und bedienen kann. Insbesondere ist die Einfachheit der Bedienung derart, dass das Bedienelement eine blinde Bedienung des Bedienelements ermöglicht, was die Handhabung bei der Einstellung bestimmter, über das Bedienelement einzustellender Parameter während der Arbeit/des Tragens des Exoskeletts erleichtert. Die Möglichkeit zur blinden Bedienung wird vorzugsweise über eine Form, Haptik und/oder Anordnung von Tasten auf dem Bedienelement realisiert. Optional kann eine akustische Rückmeldung erfolgen oder eine Steuerung über Sprache und/oder Gesten möglich sein. Vorteilhafte Weiterbildungen sind Gegenstand der Unteransprüche.

Die Erfindung betrifft ferner ein Verfahren gemäß Anspruch 14 Weitere exemplarische Details sowie beispielhafte Ausführungsformen werden nachstehend unter Bezugnahme auf die Figuren erläutert. Dabei zeigt
- Figur 1: eine schematische Seitenansicht einer Exoskelett-Vorrichtung,
- Figur 2: eine schematische Seitenansicht eines von einem Anwender getragenen Exoskeletts,
- Figur 3: eine schematische Detailansicht eines Unterstützungsabschnitts des Exoskeletts,
- Figur 4: eine schematische Rückansicht des Exoskeletts,
- Figur 5: eine perspektivische Ansicht einer exemplarischen Ausgestaltung des Exoskeletts,
- Figur 6: eine Draufsicht auf ein Bedienelement,
- Figur 7: eine Seitenansicht auf das Bedienelement,
- Figur 8: eine weitere Seitenansicht auf das Bedienelement,
- Figur 9: eine perspektivische Ansicht des Bedienelements,
- Figur 10: eine Draufsicht auf ein Bedienelement gemäß einer weiteren Variante,
- Figur 11: eine Draufsicht auf ein Bedienelement gemäß einer weiteren Variante und
- Figur 12: eine schematische Seitenansicht eines Saugers.

Bei den nachfolgenden Erläuterungen wird Bezug genommen auf die in den Figuren eingezeichneten, orthogonal zueinander ausgerichteten Raumrichtungen x-Richtung, y-Richtung und z-Richtung. Die z-Richtung kann auch als Vertikalrichtung, die x-Richtung als Tiefenrichtung und die y-Richtung als Breitenrichtung bezeichnet werden.

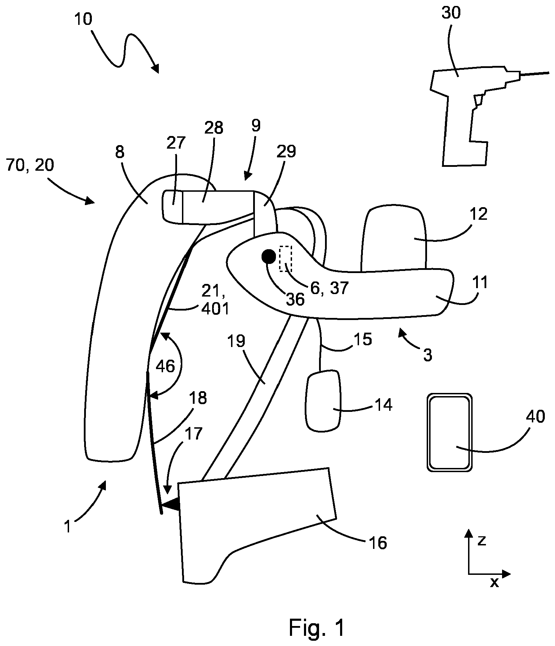

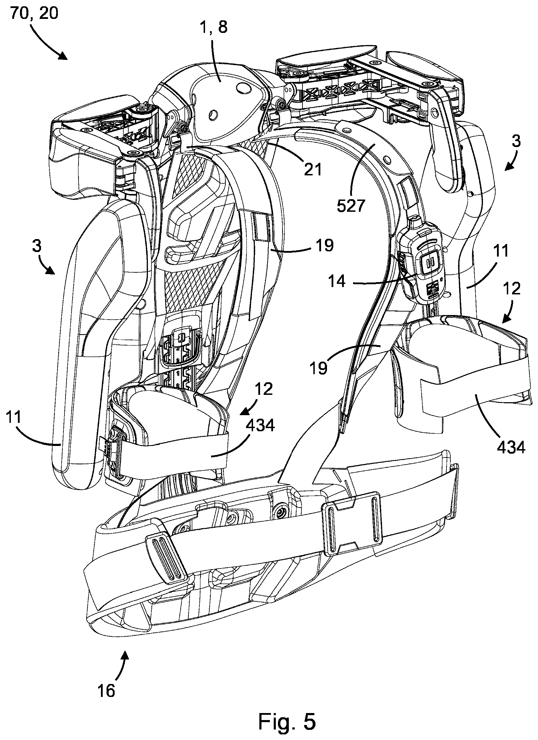

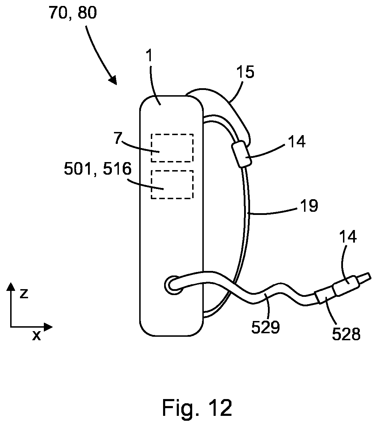

Die Figur 12 zeigt ein elektrisch betreibbares Gerät 70, das gemäß einem nicht beanspruchten, technischen Beispiel als Sauger 80 ausgeführt ist. In den Figuren 1, 2, 4 und 5 ist das elektrisch betreibbare Gerät 70 in einer Ausführung als Exoskelett 20 gezeigt.

Das elektrisch betreibbare Gerät 70 umfasst einen Basisabschnitt 1 zur Anbringung an einen Körperabschnitt, insbesondere den Torso 2, des menschlichen Körpers. Das elektrisch betreibbare Gerät 70 umfasst ferner eine Aktor- und/oder Antriebseinrichtung 501 sowie eine Steuereinrichtung 7 zur Ansteuerung der Aktor- und/oder Antriebseinrichtung 501. Ferner umfasst das elektrisch betreibbare Gerät 70 ein Bedienelement 14. Das Bedienelement 14 dient für eine Anwendereingabe in die Steuereinrichtung 7. Das Bedienelement 14 ist vom Anwender des elektrisch betreibbaren Geräts während der Verwendung des elektrisch betreibbaren Geräts händisch bedienbar. Das Bedienelement 14 umfasst zweckmäßigerweise ein Bedienelement-Gehäuse 519.

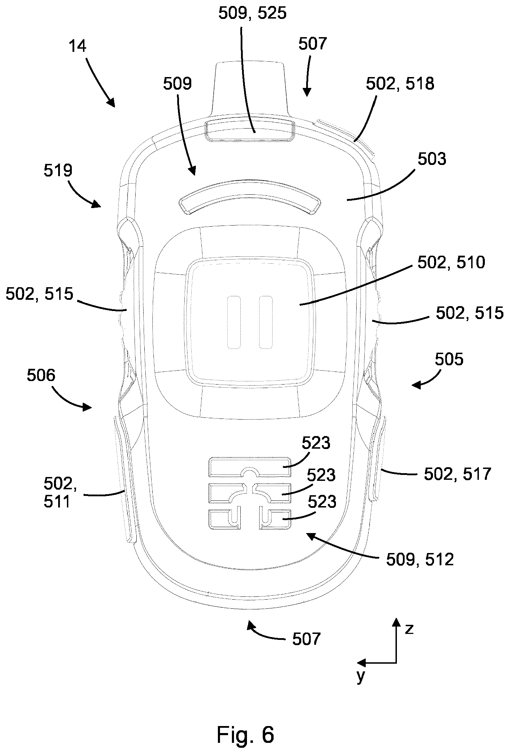

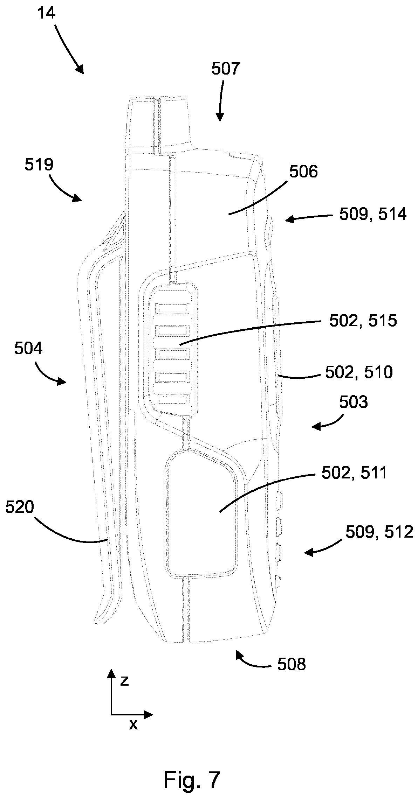

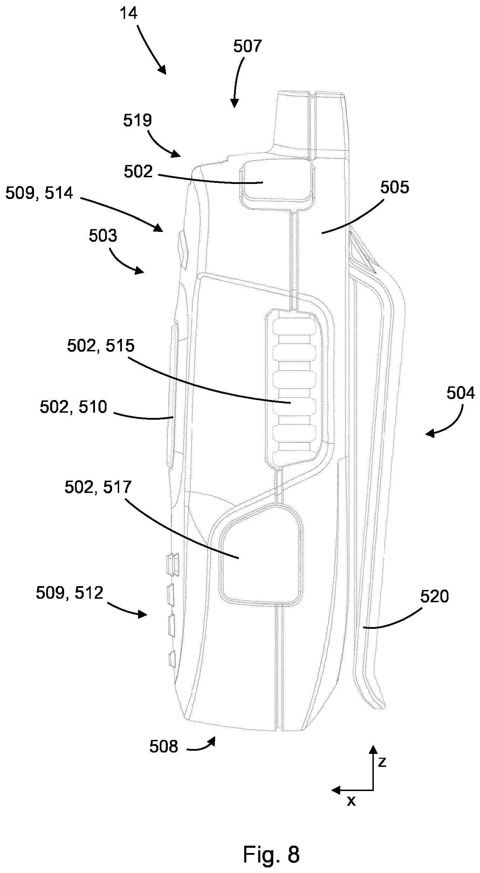

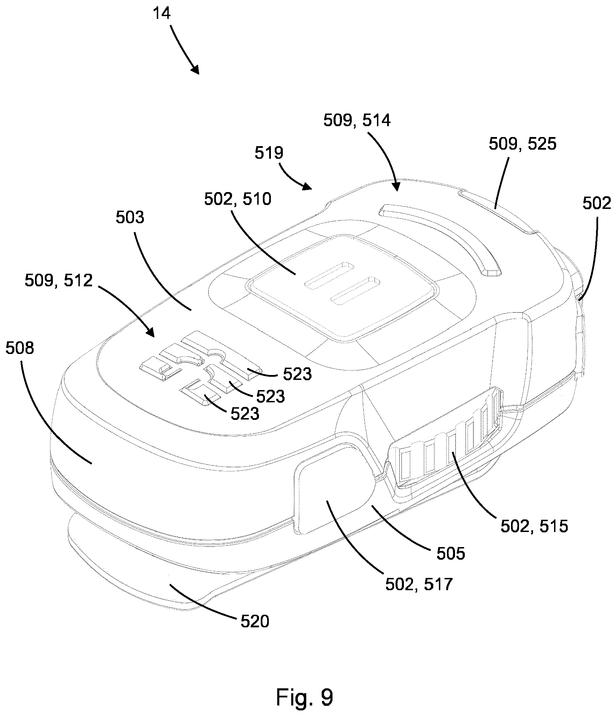

Exemplarische Ausgestaltungen des Bedienelements 14 sind in den Figuren 6 bis 11 gezeigt.

Bevorzugt ist das Bedienelement 14 als händisch umgreifbares, insbesondere nicht integral mit dem elektrisch betreibbaren Gerät 70 ausgebildetes, Handbedienelement ausgeführt. Insbesondere umfasst das Bedienelement 14 mehrere Eingabeelemente 502. Bevorzugt sind die Eingabeelemente 502 derart angeordnet, dass alle Eingabeelemente 502 mit einer das Bedienelement 14 umgreifenden und dadurch haltenden Hand bedienbar sind. Exemplarisch sind die Eingabeelemente 502 an verschiedenen Seiten und/oder auf verschiedenen Flächen des Bedienelements angeordnet. Mehrere der Eingabeelemente 502 sind vorzugsweise als jeweilige Tasten ausgeführt. Insbesondere ist auf jeder Seite und/oder Fläche des Bedienelements 14 maximal eine Taste vorhanden. Auf diese Weise kann erzielt werden, dass der Anwender beim Griff an eine Seite des Bedienelements 14 nur die jeweils eine auf dieser Seite vorhandene Taste drücken kann. Zweckmäßigerweise ist durch die Anordnung der Eingabeelemente 502 eine blinde Bedienung der Eingabeelemente 502 möglich.

Das Bedienelement 14 umfasst zweckmäßigerweise eine Vorderseite 503, die insbesondere eine flächenmäßig größte Seite des Bedienelements 14 darstellt. Das Bedienelement umfasst ferner eine insbesondere entgegengesetzt zur Vorderseite 503 ausgerichtete Rückseite 504, eine exemplarisch als Längsseite ausgeführte erste seitliche Seite 505 und eine exemplarisch als Längsseite ausgeführte zweite seitliche Seite 506, die insbesondere entgegengesetzt zur ersten seitlichen Seite 505 ausgerichtet ist. Das Bedienelement 14 umfasst ferner eine Oberseite 507 und eine insbesondere entgegengesetzt zur Oberseite 507 ausgerichtete Unterseite 508.

Bevorzugt hat das Bedienelement 14 eine Grundgestalt eines Quaders, insbesondere mit abgerundeten Ecken und/oder abgerundeten Kanten, wie dies z.B. in den Figuren 6 bis 9 gezeigt ist.

Das Bedienelement 14 soll in einer räumlichen Ausrichtung diskutiert werden, in der die Vorderseite 503 senkrecht zur x-Richtung und nach vorne ausgerichtet ist und die Oberseite 507 senkrecht zur z-Richtung nach oben ausgerichtet ist.

Rein exemplarisch sind an der Vorderseite 503, der ersten seitlichen Seite 505, der zweiten seitlichen Seite 506 und der Oberseite jeweils wenigstens ein Eingabeelement 502 angeordnet. An der Unterseite 508 und der Rückseite 504 ist zweckmäßigerweise kein Eingabeelement 502, insbesondere keine Taste, angeordnet.

Bevorzugt unterscheiden sich mehrere, insbesondere sämtliche, der Eingabeelemente 502 in ihrer Form, Größe, optischer Struktur und/oder haptischer Struktur voneinander. Durch diese Ausgestaltung der Eingabeelemente 502 kann das Risiko einer Verwechslung von Eingabeelementen 502 reduziert oder ausgeschlossen werden. Zweckmäßigerweise kommt jede Form, Größe, optische Struktur/und oder haptische Struktur eines Eingabeelements 502, insbesondere einer Taste des Bedienelements 14, nur einmal vor.

Optional sind für auf gegenüberliegenden Seiten und/oder Flächen angeordnete als Tasten ausgeführte Eingabeelemente 502 unterschiedliche Tastendruckzeiten definiert. Jede Tastendruckzeit ist eine Zeitdauer, für die die jeweilige Taste wenigstens oder höchstens gedrückt werden muss, damit das Drücken der Taste vom elektrisch betreibbaren Gerät, beispielsweise dem Exoskelett 20 oder dem Sauger 80, als Anwendereingabe erkannt und zweckmäßigerweise eine zugehörige Funktion ausgelöst wird. Durch die Definition unterschiedlicher Tastendruckzeiten kann zweckmäßigerweise bei einem falschen Halten des Bedienelements 14, beispielsweise bei einem Halten, bei dem das Bedienelement um 180 Grad gegenüber seiner bestimmungsgemäßen Ausrichtung in der Hand des Anwenders verdreht ist, verhindert werden, dass ein Drücken einer falschen Taste als Anwendereingabe erkannt und/oder eine zugehörige Funktion ausgelöst wird, insbesondere unbeabsichtigt ausgelöst wird.

Vorzugsweise ist jedes als Taste ausgeführte Eingabeelement 502 wenigstens so groß wie eine Fingerspitze einer erwachsenen Person.

Optional können die Eingabeelemente 502 jeweils eine Blindencode-Markierung aufweisen. Optional können sich auf der Oberfläche der als Tasten ausgeführten Eingabeelemente 502 haptisch fühlbare Symbole befinden, die beispielsweise erhaben oder vertieft sind und insbesondere eine blinde Bedienung erleichtern.

Ferner kann das Bedienelement 14 vorzugsweise als Rechtshänder-Version oder als Linkshänder-Version ausgeführt sein. Optional kann das elektrisch betreibbare Gerät 70 wahlweise ein Rechtshänder-Modus oder ein Linkshänder-Modus bereitstellen, wobei eine Auswertung einer Eingabe mittels eines als Drehrad ausgeführten Eingabeelements 502 davon abhängt, ob der Rechtshänder-Modus oder der Linkshänder-Modus aktiv ist, insbesondere in Bezug auf eine Auswertung der Drehrichtung des Drehrads.

Exemplarisch weist das Bedienelement 14 mehrere Anzeigeelemente 509 auf, die auf derselben Seite, exemplarisch auf der Vorderseite 503, des Bedienelements 14 angeordnet sind. Vorzugsweise sind alle Anzeigeelemente 509 gleichzeitig einsehbar. Zweckmäßigerweise dient jedes Anzeigeelement 509 zur Anzeige einer anderen Anzeigeinformation. Zweckmäßigerweise unterscheiden sich mehrere oder sämtliche Anzeigeelemente 509 in ihrer Form voneinander.

Bevorzugt kann jedes Anzeigeelement 509 nur eine Anzeigefunktion haben und/oder kann einem, insbesondere nur einem, Parameter zugeordnet sein. Beispielsweise ist das elektrisch betreibbare Gerät 70, insbesondere das Bedienelement 14 und/oder die Anzeigeelemente 509 derart ausgebildet, dass auf jedem Anzeigeelement 509 stets die gleiche jeweilige Anzeigefunktion und/oder der gleiche jeweilige Parameter angezeigt wird. Es besteht also vorzugsweise eine feste (insbesondere nicht änderbare) Zuordnung zwischen jedem Anzeigeelement 509 und der jeweiligen Anzeigefunktion und/oder dem jeweiligen Parameter.

Bevorzugt ist auf der Rückseite 504 - also exemplarisch der den Anzeigeelementen 509 abgewandten Seite - ein Befestigungselement 520 angeordnet, mit dem das Bedienelement 14 an einer Befestigungsstelle, beispielsweise an einem Schultergurt 19, des elektrisch betreibbaren Geräts, insbesondere werkzeuglos befestigt werden kann. Exemplarisch ist das Befestigungselement 520 als Clip, insbesondere als Hakenelement, ausgeführt. Das elektrisch betreibbare Gerät 70 weist zweckmäßigerweise ein Einhängelement, beispielsweise eine Lasche oder eine Tasche, auf, in die das Befestigungselement 520 eingehängt werden kann. Das Einhängelement ist beispielsweise am Schultergurt 19 angeordnet.

Zweckmäßigerweise sind in einem Zustand, in dem das Bedienelement 14 mit dem Befestigungselement 520 insbesondere an dem Einhängelement befestigt ist, sämtliche Eingabeelemente 502 durch den Anwender bedienbar und/oder durch Ertasten eindeutig zuordenbar. Vorzugsweise muss das Bedienelement 14 zur Vornahme einer Anwendereingabe mittels des Bedienelements 14 nicht aus seiner Befestigung gelöst werden, insbesondere nicht von dem Einhängelement abgenommen werden.

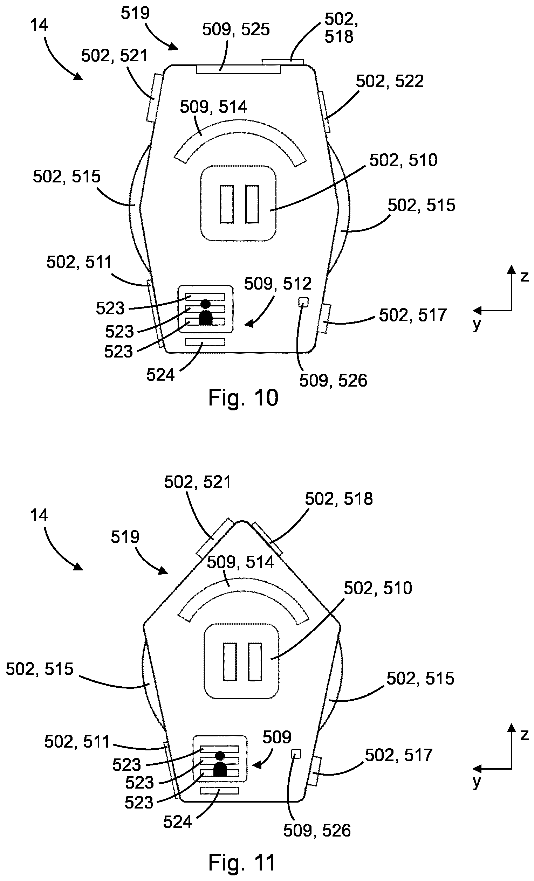

In den Figuren 10 und 11 sind optionale Varianten des Bedienelements 14 gezeigt. Bei diesen Varianten sind zusätzliche Tasten vorhanden. Bis auf die nachstehend erläuterten Unterschiede sind die Varianten wie das im Zusammenhang mit den Figuren 6 bis 9 erläuterte Bedienelement 14 ausgeführt, so dass die diesbezüglichen Erläuterung auch für die in den Figuren 10 und 11 gezeigten Varianten gelten.

Optional umfasst das Bedienelement 14 wenigstens fünf oder sechs, vorzugsweise genau fünf oder genau sechs, Seitenflächen. Als Seitenfläche soll eine senkrecht zur Vorderseite und/oder zwischen Vorderseite und Rückseite befindliche Fläche bezeichnet werden. Exemplarisch ist an jeder Seitenfläche, außer der an der Unterseite befindlichen Seitenfläche, eine Taste, insbesondere maximal eine Taste, angeordnet.

Bei der in der Figur 10 gezeigten Variante sind die seitlichen Seiten in jeweils zwei Seitenflächen unterteilt, so dass sich insgesamt sechs Seitenflächen ergeben. An zwei an der Oberseite angrenzenden Seitenflächen ist jeweils ein als Taste ausgeführtes Eingabeelement 502 vorhanden. Diese Tasten sollen auch als erste Zusatz-Taste 521 und zweite Zusatz-Taste 522 bezeichnet werden. Auf der Oberseite ist ein Ein-Aus-Eingabeelement 518 angeordnet.

Bei der in der Figur 11 gezeigten Variante ist die Oberseite in zwei Seitenflächen unterteilt. Auf der an die erste seitliche Seite angrenzenden ersten Seitenfläche der Oberseite ist ein Ein-Aus-Eingabeelement 518 angeordnet. Auf der an die zweite seitliche Seite angrenzenden zweiten Seitenfläche der Oberseite ist eine erste Zusatz-Taste 521 angeordnet.

Die Seitenflächen können durch scharfe Kanten oder durch Verrundungen voneinander getrennt sein. Die Seitenflächen können ebene Flächen sein oder eine Krümmung aufweisen. Zweckmäßigerweise sind die Seitenflächen als einzelne Seitenflächen erkennbar und/oder ertastbar.

Optional weisen die als Tasten ausgeführten Eingabeelemente 502 alle unterschiedliche Größen auf und/oder erheben sich alle unterschiedlich stark über das Bedienelement-Gehäuse 519 hinaus.

Im Folgenden soll näher auf die Ausführung des elektrisch betreibbaren Geräts 70 als Exoskelett 20 eingegangen werden.

Die Figur 1 zeigt eine schematische Darstellung einer Exoskelett-Vorrichtung 10, die das als Exoskelett 20 ausgeführte elektrisch betreibbare Gerät 70 sowie optional ein Werkzeug 30 und/oder ein Mobilgerät 40 umfasst. Das Exoskelett 20 kann auch für sich genommen bereitgestellt sein. Das Werkzeug 30 und/oder das Mobilgerät 40 sind exemplarisch separat von dem Exoskelett 20 vorhanden, also insbesondere nicht mechanisch mit dem Exoskelett 20 verbunden. Bei dem Werkzeug 30 handelt es sich beispielsweise um ein Elektrowerkzeug, insbesondere um einen Akkuschrauber und/oder eine Bohrmaschine und/oder eine Schleifmaschine. Das Mobilgerät 40 ist vorzugsweise ein Smartphone oder ein Tablet. Optional ist das Exoskelett 20 ausgebildet, mit dem Werkzeug 30 und/oder dem Mobilgerät 40 zu kommunizieren, insbesondere drahtlos.

Exemplarisch ist das Exoskelett 20 in einer aufrechten Ausrichtung mit seiner Vertikalachse (die insbesondere parallel zu einer Basisabschnitt-Achse 62 verläuft) parallel zur z-Richtung ausgerichtet. Insbesondere ist das Exoskelett 20 in der aufrechten Ausrichtung mit seiner Sagitalachse parallel zur x-Richtung ausgerichtet. Die Sagitalachse des Exoskeletts 20 verläuft in einem Zustand, in dem der Anwender das Exoskelett 20 angelegt hat, parallel zur Sagitalachse des Anwenders, also insbesondere parallel zu einer Richtung von hinten - also insbesondere dem Rücken des Anwenders - nach vorne - also insbesondere der Brust des Anwenders. Die Horizontalachse des Exoskeletts 20 verläuft insbesondere in Breitenrichtung des Exoskeletts 20 und/oder parallel zur y-Richtung. Die Horizontalachse des Exoskeletts 20 verläuft in einem Zustand, in dem der Anwender das Exoskelett 20 angelegt hat, parallel zur Horizontalachse des Anwenders, also insbesondere parallel zu einer Richtung von einer ersten Schulter des Anwenders zu einer zweiten Schulter des Anwenders. Die Vertikalachse des Exoskeletts 20, Sagitalachse des Exoskeletts 20 und die Horizontalachse des Exoskeletts 20 sind orthogonal zueinander ausgerichtet.

Die Exoskelett-Vorrichtung 10 ist insbesondere für den handwerklichen und/oder den industriellen Einsatz ausgebildet. Vorzugsweise ist die Exoskelett-Vorrichtung 10 nicht für einen medizinischen und/oder nicht für einen therapeutischen Einsatz ausgebildet.

Das Exoskelett 20 ist ein aktives Exoskelett und verfügt insbesondere über eine interne Energiequelle, aus der die Energie für die Unterstützungskraft bereitgestellt wird. Insbesondere ist das Exoskelett 20 ein aktives Exoskelett zur aktiven Unterstützung des Schultergelenks des Anwenders.

Das Exoskelett 20 umfasst den Basisabschnitt 1, der zur Anbringung an einen Körperabschnitt eines menschlichen Körpers eines Anwenders dient. Exemplarisch dient der Basisabschnitt 1 dazu, an den Torso 2 des menschlichen Körpers angebracht zu werden.

Der Basisabschnitt 1 umfasst einen Hauptabschnitt und ein textiles Tragesystem, das insbesondere lösbar an dem Hauptabschnitt angebracht ist. Der Hauptabschnitt dient exemplarisch dazu, mittels des textilen Tragesystems an dem Rücken des menschlichen Körpers getragen zu werden, insbesondere rucksackartig. Der Hauptabschnitt umfasst ein Rückenteil 8, das insbesondere länglich ausgeführt ist und das zweckmäßigerweise mit seiner Längsachse vertikal und/oder in Längsrichtung des Rückens des Anwenders ausgerichtet ist. Beispielsweise erstreckt sich die Längsrichtung des Rückenteils 8 entlang der Längsrichtung des Rückens. Der Hauptabschnitt umfasst ferner ein insbesondere leistenförmiges und/oder steifes Kraftübertragungselement 18, das sich von dem Rückenteil 8 nach unten hin zu einem Beckengurt 16 erstreckt, um das Rückenteil 8 mechanisch mit dem Beckengurt 16 zu koppeln. Das Kraftübertragungselement 18 dient zweckmäßigerweise dazu, um eine von einem Unterstützungsabschnitt 3 auf das Rückenteil 8 übertragene Reaktionskraft weiter zum Beckengurt 16 zu übertragen. Exemplarisch ist das Rückenteil 8 schlauchförmig und/oder rucksackförmig ausgeführt. Das Rückenteil 8 ist insbesondere steif ausgeführt. Insbesondere umfasst das Rückenteil 8 ein zweckmäßigerweise steifes Rückenteil-Gehäuse, das beispielsweise aus einem insbesondere steifen Kunststoff und/oder als Hartschale gefertigt ist. Das Rückenteil 8 dient zweckmäßigerweise dazu, eine Kraft von dem Unterstützungsabschnitt 3 an das Kraftübertragungselement 18 zu übertragen und/oder Komponenten für die Steuerung der Unterstützungskraft aufzunehmen.

Der Unterstützungsabschnitt 3 kann zweckmäßigerweise als Armaktor bezeichnet werden.

Das Kraftübertragungselement 18 ist exemplarisch schwertförmig ausgeführt und kann auch als Schwert bezeichnet werden. Zweckmäßigerweise ist das Kraftübertragungselement 18 relativ zum Rückenteil 8 verstellbar ausgeführt, um insbesondere die vertikale Erstreckung des Hauptabschnitts und/oder einen dem Rücken des Anwenders zugewandten Kraftübertragungselement-Winkel 46 zwischen dem Kraftübertragungselement 18 und dem Rückenteil 8 zu verändern. Zweckmäßigerweise ist das Kraftübertragungselement 18 translatorisch und/oder rotatorisch beweglich relativ zum Rückenteil 8 gelagert und insbesondere in verschiedene translatorische und/oder rotatorische Stellungen relativ zum Rückenteil 8 versetzbar und insbesondere verriegelbar. Die translatorische Bewegung erfolgt insbesondere vertikal. Die rotatorische Bewegung erfolgt zweckmäßigerweise um eine parallel zur y-Richtung ausgerichtete Verstellachse.

Das textile Tragesystem umfasst exemplarisch den Beckengurt 16 und/oder wenigstens einen, vorzugsweise zwei, Schultergurte 19. Der Beckengurt 16 bildet zweckmäßigerweise eine Schlaufe, so dass er im getragenen Zustand den Torso 2, insbesondere die Hüfte, des Anwenders umschließt. Jeder Schultergurt 19 verläuft exemplarisch vom Hauptabschnitt, insbesondere vom Rückenteil 8, hin zum Beckengurt 16, und zwar zweckmäßigerweise im getragenen Zustand des Exoskeletts 20 über eine jeweilige Schulter des Anwenders.

Das Exoskelett 20 umfasst ferner exemplarisch ein Kraftübertragungselement-Gelenk 17, über das das Kraftübertragungselement 18 an dem Beckengurt 16 angebracht ist. Das Kraftübertragungselement-Gelenk 17 ist beispielsweise als Kugelgelenk ausgeführt und kann als Sakrumgelenk bezeichnet werden. Im getragenen Zustand des Exoskeletts 20 ist das Kraftübertragungselement-Gelenk 17 im unteren Rückenbereich des Anwenders angeordnet, insbesondere in Breitenrichtung zentriert.

Das textile Tragesystem umfasst exemplarisch ferner ein Rückennetz 21, das an der dem Rücken des Anwenders zugewandten Seite des Rückenteils 8 angeordnet ist. Im getragenen Zustand des Exoskeletts 20 liegt das Rückennetz 21 an dem Rücken des Anwenders an, insbesondere zumindest teilweise und/oder im oberen Rückenbereich.

Das Exoskelett 20 umfasst ferner den beweglich mit dem Basisabschnitt 1 gekoppelten Unterstützungsabschnitt 3 zur Unterstützung eines Körperteils, vorzugsweise einer Gliedmaße, insbesondere eines Arms 4, des menschlichen Körpers des Anwenders. Der Unterstützungsabschnitt 3 ist insbesondere ausgebildet, an dem Körperteil, vorzugsweise der Gliedmaße, insbesondere dem Arm 4, des Anwenders befestigt zu werden. Der Unterstützungsabschnitt 3 umfasst exemplarisch ein insbesondere steifes Armteil 11 und eine am Armteil 11 angeordnete Armbefestigung 12, die exemplarisch als Armschale ausgeführt ist. Das Armteil 11 ist exemplarisch länglich ausgeführt und ist im getragenen Zustand mit seiner Längsachse in Richtung der Längsachse des Arms des Anwenders ausgerichtet. Exemplarisch erstreckt sich das Armteil 11 von der Schulter des Anwenders bis zum Ellbogenbereich des Anwenders. Das Exoskelett 20, insbesondere das Armteil 11, endet exemplarisch am Ellbogenbereich des Anwenders. Die Armbefestigung 12 dient insbesondere zur Befestigung des Unterstützungsabschnitts 3 an dem Arm 4, insbesondere dem Oberarm, des Anwenders. Insbesondere umgreift die Armschale den Oberarm des Anwenders, insbesondere zumindest teilweise, so dass der Oberarm mit einem Band in der Armschale gehalten werden kann. Der Unterarm des Anwenders wird zweckmäßigerweise nicht am Exoskelett 20 befestigt.

Der Körperteil ist vorzugsweise eine Gliedmaße des menschlichen Körpers. Beispielsweise ist der Körperteil ein Arm des menschlichen Körpers. Ferner kann es sich bei dem Körperteil um den Rücken des menschlichen Körpers handeln. In diesem Fall dient der Basisabschnitt zweckmäßigerweise zur Anbringung an ein Bein des menschlichen Körpers; d.h. der Körperabschnitt (an den der Basisabschnitt anzubringen ist) kann in dem Fall, in dem der Körperteil der Rücken ist, beispielsweise ein Bein sein.

Der Unterstützungsabschnitt 3 ist exemplarisch um eine horizontale Schwenkachse relativ zum Basisabschnitt 1, insbesondere relativ zum Rückenteil 8, verschwenkbar gelagert. Exemplarisch ist der Unterstützungsabschnitt 3 direkt an einem Schulterteil 29 gelagert. Die horizontale Schwenkachse kann auch als Hebeachse 36 bezeichnet werden. Im getragenen Zustand des Exoskeletts 20 ist die Hebeachse 36 im Bereich der Schulter des Anwenders angeordnet. Das Exoskelett 20 ist insbesondere ausgebildet, mit dem Unterstützungsabschnitt 3 das Schultergelenk des Anwenders zu unterstützen. Im getragenen Zustand des Exoskeletts 20 kann der Anwender durch ein Verschwenken des Unterstützungsabschnitts 3 um die Hebeachse 36 mit seinem von dem Unterstützungsabschnitt 3 unterstützten Arm 4 eine Hebebewegung ausführen. Die Hebeachse 36 kann insbesondere in y-Richtung ausgerichtet sein. Zweckmäßigerweise liegt die Hebeachse 36 stets in einer horizontalen Ebene, beispielsweise einer x-y-Ebene. Unter einer horizontalen Ebene ist insbesondere eine exakt horizontale Ebene und/oder eine Ebene zu verstehen, die maximal um 10 Grad, 7 Grad oder 5 Grad gegenüber einer Horizontalen gekippt ist.

Der Schwenkwinkel 47 des Unterstützungsabschnitts 3 um die Hebeachse 36 relativ zum Basisabschnitt 1 soll auch als Hebewinkel bezeichnet werden. Der Schwenkwinkel 47 hat bei einem nach unten ausgerichteten Unterstützungsabschnitt 3 (bei einem vertikal ausgerichteten Exoskelett 20) einen Referenzwert, insbesondere einen Minimalwert, und steigt bei einem nach oben gerichteten Verschwenken des Unterstützungsabschnitts 3 kontinuierlich bis zu einem Maximalwert an. Der Minimalwert ist insbesondere ein betragsmäßiger Minimalwert, beispielsweise Null.

Exemplarisch ist der Schwenkwinkel 47 als Winkel zwischen einer Unterstützungsabschnitt-Achse 61 und einer Basisabschnitt-Achse 62 definiert. Die Unterstützungsabschnitt-Achse 61 verläuft in Längsrichtung des Unterstützungsabschnitts 3. Exemplarisch verläuft die Unterstützungsabschnitt-Achse 61 von der Hebeachse 36 in Richtung zu der Armbefestigung 12. In einem Zustand, in dem der Anwender das Exoskelett 20 angelegt hat, verläuft die Unterstützungsabschnitt-Achse 61 zweckmäßigerweise parallel zu einer Oberarm-Achse des von dem Unterstützungsabschnitt 3 unterstützten Arms 4. Die Basisabschnitt-Achse 62 stellt zweckmäßigerweise eine vertikale Achse des Basisabschnitts 1 dar und verläuft vertikal nach unten, insbesondere bei einer vertikalen Ausrichtung des Basisabschnitts 1, beispielsweise in einem Zustand, in dem der Anwender das Exoskelett 20 angelegt hat und aufrecht steht. Der Schwenkwinkel 47 liegt exemplarisch in einer z-x-Ebene, beispielsweise dann, wenn der Anwender aufrecht steht und die Arme nach vorne gehoben werden.

Das Exoskelett 20 umfasst exemplarisch eine Schultergelenkanordnung 9, über die der Unterstützungsabschnitt 3 an dem Basisabschnitt 1, insbesondere dem Rückenteil 8, angebracht ist. Die Schultergelenkanordnung 9 umfasst zweckmäßigerweise eine Gelenkkette mit einem oder mehrerer Drehlager zur Definition einer oder mehrerer vertikaler Drehachsen. Mittels der Gelenkkette ist zweckmäßigerweise ein Verschwenken des Unterstützungsabschnitts 3 relativ zum Basisabschnitt 1, insbesondere relativ zum Rückenteil 8, in einer vorzugsweise horizontalen Schwenkebene möglich, beispielsweise um eine insbesondere virtuelle vertikale Drehachse. Insbesondere ermöglicht es die Gelenkkette dem Anwender, seinen von dem Unterstützungsabschnitt 3 unterstützten Arm 4 um eine durch die Schulter des Anwenders verlaufende vertikale Drehachse zu schwenken, wobei der Unterstützungsabschnitt 3 mit dem Arm 4 mitbewegt wird. Exemplarisch ist die Gelenkkette passiv ausgeführt, so dass das Exoskelett 20 bei dem Verschwenken des Arms in der vorzugsweise horizontalen Schwenkebene keine aktive Unterstützungskraft in Richtung der horizontalen Schwenkbewegung bereitstellt.

Die Schultergelenkanordnung 9 ist zweckmäßigerweise derart angeordnet und/oder ausgebildet, dass sie einen freien Raum definiert, der sich im getragenen Zustand des Exoskeletts 20 oberhalb der Schulter des das Exoskelett 20 tragenden Anwenders befindet, so dass der Anwender durch den freien Raum an der Schultergelenkanordnung 9 vorbei seinen von dem Unterstützungsabschnitt 3 unterstützen Arm senkrecht nach oben ausrichten kann.

Die Schultergelenkanordnung 9 umfasst exemplarisch einen inneren Schultergelenkabschnitt 27, der mittels eines ersten Drehlagers der Schultergelenkanordnung 9 um eine erste vertikale Drehachse verschwenkbar relativ zum Basisabschnitt 1, insbesondere zum Rückenteil 8, gelagert ist. Die Schultergelenkanordnung 9 umfasst exemplarisch ferner einen äußeren Schultergelenkabschnitt 28, der mittels eines zweiten Drehlagers der Schultergelenkanordnung 9 um eine zweite vertikale Drehachse verschwenkbar relativ zum inneren Schultergelenkabschnitt 27 gelagert ist. Die Schultergelenkanordnung 9 umfasst exemplarisch ferner ein Schulterteil 29, dass mittels eines dritten Drehlagers der Schultergelenkanordnung 9 um eine dritte vertikale Drehachse verschwenkbar relativ zum äußeren Schultergelenkabschnitt 28 gelagert ist. Vorzugsweise sind der innere Schultergelenkabschnitt 27, der äußere Schultergelenkabschnitt 28 und das Schulterteil 29 in der Schultergelenkanordnung 9 derart als die Gelenkkette miteinander kinematisch gekoppelt, dass durch den Schwenkwinkel des inneren Schultergelenkabschnitts 27 relativ zum Basisabschnitt 1 der Schwenkwinkel des äußeren Schultergelenkabschnitt 28 relativ zum inneren Schultergelenkabschnitt 27 und/oder der Schwenkwinkel des Schulterteils 29 relativ zum äußeren Schultergelenkabschnitt 28 festgelegt wird.

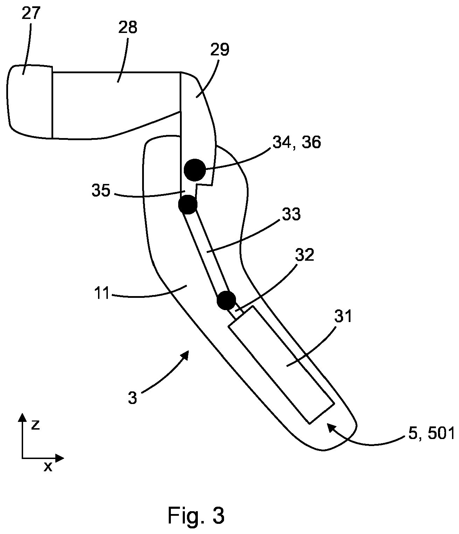

Die Figur 3 zeigt eine schematische Detailansicht des Unterstützungsabschnitts 3, wobei innerhalb des Armteils angeordnete Komponenten sichtbar eingezeichnet sind. Das Armteil 11 umfasst zweckmäßigerweise ein Armteil-Gehäuse, das insbesondere steif ausgeführt und beispielsweise aus Kunststoff gefertigt ist.

Das Exoskelett 20 umfasst eine auf den Unterstützungsabschnitt 3 wirkende Aktoreinrichtung 5 zur Bereitstellung einer Unterstützungskraft für den Körperteil, vorzugsweise die Gliedmaße, exemplarisch für den Arm des Anwenders. Exemplarisch ist die Aktoreinrichtung 5 zumindest teilweise in dem Armteil 11 angeordnet. Insbesondere ist die Aktor- und/oder Antriebseinrichtung 501 die Aktoreinrichtung 5.

Die Aktoreinrichtung 5 ist eine aktive Aktoreinrichtung. Zweckmäßigerweise stellt das Exoskelett 20 mittels der Aktoreinrichtung 5 die Unterstützungskraft mit einer in Richtung der Schwenkbewegung um die Hebeachse 36 nach oben wirkenden Kraftkomponente bereit, die den Arm 4 des Anwenders in Richtung der Schwenkbewegung nach oben drückt.

Vorzugsweise umfasst die Aktoreinrichtung 5 eine Aktoreinheit mit einem Aktorglied 32. Die Aktoreinheit kann das Aktorglied 32 mit einer Aktorkraft beaufschlagen, um die Unterstützungskraft bereitzustellen. Das Aktorglied 32 ist mit einem exzentrisch zur Hebeachse 36 angeordneten Exzenterabschnitt 35 gekoppelt. Der Exzenterabschnitt 35 ist beispielsweise Teil des Schulterteils 29. Über die Kopplung des Aktorglieds 32 mit dem Exzenterabschnitt 35 wird durch die Aktorkraft ein Drehmoment des Unterstützungsabschnitts 3 um die Hebeachse 36 relativ zum Basisabschnitt 1 und/oder dem Schulterteil 29 bereitgestellt. Durch dieses Drehmoment drückt der Unterstützungsabschnitt 3 gegen die den Körperteil, vorzugsweise die Gliedmaße, insbesondere den Arm 4, des Anwenders, insbesondere nach oben, und stellt so die auf den Körperteil, vorzugsweise die Gliedmaße, insbesondere den Arm 4, des Anwenders wirkende Unterstützungskraft bereit.

Exemplarisch verfügt die Aktoreinrichtung 5 über ein insbesondere als Schubstange ausgeführtes Koppelelement 33, über das das Aktorglied 32 mit dem Exzenterabschnitt 35 gekoppelt ist.

Bevorzugt ist die Aktoreinrichtung 5 eine pneumatische Aktoreinrichtung und die Aktoreinheit ist zweckmäßigerweise als pneumatischer Antriebszylinder 31 ausgeführt. Das Aktorglied 32 ist die Kolbenstange des Antriebszylinders 31.

Alternativ kann die Aktoreinrichtung auch nicht als pneumatische Aktoreinrichtung ausgeführt sein. Beispielsweise kann die Aktoreinrichtung als hydraulische und/oder elektrische Aktoreinrichtung ausgeführt sein und zweckmäßigerweise als die Aktoreinheit eine hydraulische Antriebseinheit und/oder eine elektrische Antriebseinheit umfassen.

Der Antriebszylinder 31, das Aktorglied 32 und/oder das Koppelelement 33 sind bevorzugt in dem Armteil-Gehäuse angeordnet.

Das Exoskelett 20 umfasst zweckmäßigerweise ein Hebe-Drehlager 34, das die Hebeachse 36 bereitstellt. Exemplarisch ist der Unterstützungsabschnitt 3 über das Hebe-Drehlager 34 an der Schultergelenkanordnung 9 angebracht.

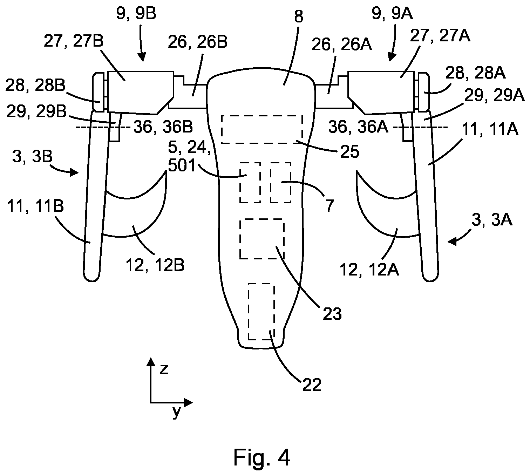

Die Figur 4 zeigt eine Rückansicht des Exoskeletts 20, wobei das textile Tragesystem und das Kraftübertragungselement 18 nicht gezeigt sind.

Das Exoskelett 20 umfasst exemplarisch einen oder mehrere Akkus 22, einen Kompressor 23, eine Ventileinheit 24 und/oder einen Drucklufttank 25, die zweckmäßigerweise Teil des Basisabschnitts 1 sind und insbesondere im Rückenteil-Gehäuse angeordnet sind.

Exemplarisch ist der Akku 22 unten am Rückenteil 8 angeordnet und insbesondere in eine Akku-Aufnahme des Rückenteils 8 von unten eingeschoben. Zweckmäßigerweise ist der Drucklufttank 25 in einem oberen Bereich im Rückenteil 8 angeordnet, exemplarisch (insbesondere in Längsrichtung des Rückenteils 8 und/oder Vertikalrichtung) über der Ventileinheit 24, der Steuereinrichtung 7, dem Kompressor 23 und/oder dem Akku 22. Die Ventileinheit 24 und/oder die Steuereinrichtung 7 ist (insbesondere in Längsrichtung des Rückenteils 8 und/oder Vertikalrichtung) zweckmäßigerweise über dem Kompressor und/oder über dem Akku 22 angeordnet. Der Kompressor 23 ist (insbesondere in Längsrichtung des Rückenteils 8 und/oder Vertikalrichtung) über dem Akku 22 angeordnet.

Der Akku 22 dient als elektrische Energieversorgung für das Exoskelett 20, insbesondere für den Kompressor 23, die Ventileinheit 24, eine Sensoreinrichtung 6 und/oder eine Steuereinrichtung 7.

Der Kompressor 23 ist ausgebildet, Luft zu komprimieren, um Druckluft zu erzeugen. Der Drucklufttank 25 ist ausgebildet, Druckluft - insbesondere die von dem Kompressor 23 erzeugte Druckluft - zu speichern.

Die Ventileinheit 24 umfasst zweckmäßigerweise ein oder mehrere elektrisch betätigbare Ventile und ist insbesondere ausgebildet, eine pneumatische Verbindung von dem Drucklufttank 25 zu einer Druckkammer des pneumatischen Antriebzylinders 31 zu beeinflussen, insbesondere wahlweise herzustellen und/oder zu sperren. Zweckmäßigerweise ist die Ventileinheit 24 ferner ausgebildet, eine pneumatische Verbindung von dem Drucklufttank 25 zur Umgebung des Exoskelett 20 und/oder eine pneumatische Verbindung von der Druckkammer des Antriebszylinders 31 zur Umgebung des Exoskelett 20 zu beeinflussen, insbesondere wahlweise herzustellen und/oder zu sperren. Die Ventileinheit 24 ist zweckmäßigerweise Teil der Aktoreinrichtung 5.

Das Exoskelett 20 umfasst ferner eine Sensoreinrichtung 6. Exemplarisch umfasst die Sensoreinrichtung 6 einen Winkelsensor 37 zur Erfassung des Winkels des Unterstützungsabschnitts 3 relativ zum Basisabschnitt 1, insbesondere des Armteils 11 relativ zum Schulterteil 29. Dieser Winkel soll auch als Schwenkwinkel 47 oder als Hebewinkel bezeichnet werden. Der Winkelsensor 37 dient insbesondere zur Erfassung des Winkels des Unterstützungsabschnitts 3 um die Hebeachse 36. Der Winkelsensor 37 ist beispielsweise als Inkrementalgeber ausgeführt und insbesondere am Hebe-Drehlager 34, insbesondere im Armteil 11 und/oder im Schulterteil 29 angeordnet.

Bevorzugt umfasst die Sensoreinrichtung 6 ferner wenigstens einen Drucksensor zur Erfassung des in der Druckkammer des Antriebszylinders 31 und/oder des in dem Drucklufttank 25 herrschenden Drucks. Der wenigstens eine Drucksensor ist zweckmäßigerweise im Rückenteil 8 und/oder im Armteil 11 angeordnet.

Die Exoskelett-Vorrichtung 10, insbesondere das Exoskelett 20, umfasst zweckmäßigerweise eine Steuereinrichtung 7, die beispielsweise einen Microcontroller umfasst oder als Microcontroller ausgeführt ist. Die Steuereinrichtung 7 dient insbesondere dazu, die Aktoreinrichtung 5, insbesondere die Ventileinheit 24, anzusteuern, um die Bereitstellung der Unterstützungskraft zu steuern. Ferner dient die Steuereinrichtung 7 zum Auslesen der Sensoreinrichtung 6, insbesondere zum Auslesen von von der Sensoreinrichtung 6 erfassten Daten und/oder zur Kommunikation mit dem Werkzeug 30 und/oder dem Mobilgerät 40. Vorzugsweise ist die Steuereinrichtung 7 ausgebildet, durch Ansteuerung der Ventileinheit 24 den in der Druckkammer des Antriebszylinders 31 herrschenden Druck einzustellen, insbesondere zu regeln, beispielsweise unter Berücksichtigung eines mittels des Drucksensors erfassten Druckwerts. Insbesondere ist die Steuereinrichtung 7 ausgebildet, zur Erhöhung der Unterstützungskraft den in der Druckkammer herrschenden Druck durch Ansteuerung der Ventileinheit 24 zu erhöhen und/oder zur Reduzierung der Unterstützungskraft den in der Druckkammer herrschenden Druck durch Ansteuerung der Ventileinheit 24 zu reduzieren.

Gemäß einer bevorzugten Ausgestaltung ist die Steuereinrichtung 7 ausgebildet, die Unterstützungskraft auf Basis des insbesondere mittels des Winkelsensors 37 erfassten Schwenkwinkels 47 des Unterstützungsabschnitts 3 einzustellen. Zweckmäßigerweise kann der Anwender durch seine Muskelkraft den Schwenkwinkel 47 des Unterstützungsabschnitts 3 durch ein Verschwenken seines Arms 4 verändern, und dadurch insbesondere die Bereitstellung der Unterstützungskraft beeinflussen. Insbesondere ist die Unterstützungskraft niedrig genug, sodass der Anwender durch seine Muskelkraft den Schwenkwinkel 47 des Unterstützungsabschnitts 3 durch ein Verschwenken seines Arms 4 verändern kann. Die Unterstützungskraft wird beispielsweise durch die Auslegung des pneumatischen Systems, insbesondere des Kompressors, und/oder durch die Steuereinrichtung 7 begrenzt.

Die Steuereinrichtung 7 ist vorzugsweise Teil des Exoskeletts 20 und exemplarisch in dem Basisabschnitt 1, insbesondere in dem Rückenteil 8 angeordnet. Optional kann die Steuereinrichtung 7 zumindest teilweise in dem Mobilgerät 40 implementiert sein.

Das Exoskelett 20 umfasst exemplarisch ein Bedienelement 14, das zweckmäßigerweise über ein Bedienelement-Kabel 15 am Basisabschnitt 1 befestigt ist. Über das Bedienelement 14 kann der Anwender das Exoskelett 20 steuern und insbesondere die Unterstützungskraft aktivieren, deaktivieren und/oder auf einen aus mehreren möglichen Kraftwerten größer null einstellen.

Das Exoskelett 20 verfügt exemplarisch ferner über ein Verbindungselement 26, über das die Schultergelenkanordnung 9 an dem Basisabschnitt 1, insbesondere dem Rückenteil 8, befestigt ist. Das Verbindungselement 26 ist exemplarisch als Auszugelement ausgeführt. Das Verbindungselement 26 ist zweckmäßigerweise relativ zum Basisabschnitt 1, insbesondere relativ zum Rückenteil 8, in seiner Position verstellbar, um die Position der Schultergelenkanordnung 9 und des Unterstützungsabschnitts 3 an die Schulterbreite des Anwenders anpassen zu können. Insbesondere ist die Position des Verbindungselements 26 durch Einschieben oder Ausziehen des Verbindungselements 26 in oder aus dem Rückenteil 8 verstellbar.

Exemplarisch verfügt das Exoskelett 20 über einen ersten Unterstützungsabschnitt 3A, eine erste Schultergelenkanordnung 9A und ein erstes Verbindungselement 26A, sowie über einen zweiten Unterstützungsabschnitt 3B, eine zweite Schultergelenkanordnung 9B und über ein zweites Verbindungselement 26B. Die Komponenten, deren Bezugszeichen mit dem Zusatz "A" oder "B" versehen sind, sind zweckmäßigerweise jeweils in Entsprechung zu den mit der gleichen Bezugszeichen-Zahl aber ohne den Zusatz "A" oder "B" versehenen Komponenten ausgeführt, beispielsweise gleich oder spiegelsymmetrisch, so dass die diesbezüglichen Erläuterungen in Entsprechung gelten.

Der erste Unterstützungsabschnitt 3A, die erste Schultergelenkanordnung 9A und das erste Verbindungselement 26A sind auf einer ersten, exemplarisch der rechten, Seite (in Breitenrichtung) des Basisabschnitts 1 angeordnet, und dienen zur Unterstützung eines ersten, insbesondere des rechten, Arms des Anwenders.

Der zweite Unterstützungsabschnitt 3B, die zweite Schultergelenkanordnung 9B und das zweite Verbindungselement 26B sind auf einer zweiten, exemplarisch der linken, Seite (in Breitenrichtung) des Basisabschnitts 1 angeordnet, und dienen zur Unterstützung eines zweiten, insbesondere des linken, Arms des Anwenders.

Der erste Unterstützungsabschnitt 3A umfasst ein erstes Armteil 11A, eine erste Armbefestigung 12A und/oder eine erste Aktoreinheit, insbesondere einen ersten Antriebszylinder.

Der zweite Unterstützungsabschnitt 3A umfasst ein zweites Armteil 11B, eine zweite Armbefestigung 12B und/oder eine zweite Aktoreinheit, insbesondere einen zweiten Antriebszylinder.

Bevorzugt ist die Steuereinrichtung 7 ausgebildet, für den ersten Unterstützungsabschnitt 3A eine mittels der ersten Aktoreinheit bewirkte erste Unterstützungskraft einzustellen und für den zweiten Unterstützungsabschnitt 3B eine mittels der zweiten Aktoreinheit bewirkte zweite Unterstützungskraft einzustellen, die sich zweckmäßigerweise von der ersten Unterstützungskraft unterscheidet.

Die erste Schultergelenkanordnung 9A umfasst einen ersten inneren Schultergelenkabschnitt 27A, einen ersten äußeren Schultergelenkabschnitt 28A und ein erstes Schulterteil 29A. Die zweite Schultergelenkanordnung 9B umfasst einen zweiten inneren Schultergelenkabschnitt 27B, einen zweiten äußeren Schultergelenkabschnitt 28B und ein zweites Schulterteil 29B.

Der erste Unterstützungsabschnitt 3A ist um eine erste horizontale Hebeachse 36A relativ zum Basisabschnitt 1 verschwenkbar und der zweite Unterstützungsabschnitt 3B ist um eine zweite horizontale Hebeachse 36B relativ zum Basisabschnitt 1 verschwenkbar.

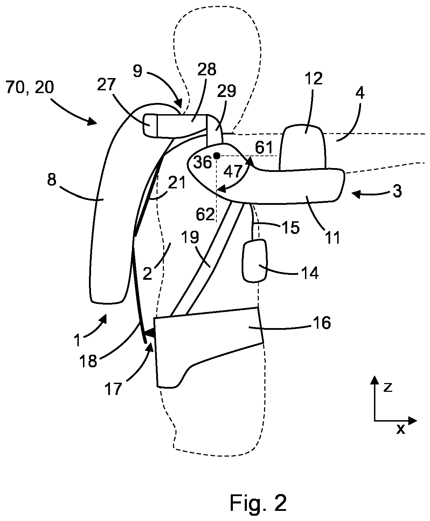

In der Figur 2 ist das Exoskelett 20 in einem Zustand gezeigt, in dem es von einem Anwender getragen, insbesondere bestimmungsgemäß getragen, wird. Mit der Formulierung, dass der Anwender das Exoskelett 20 trägt, insbesondere bestimmungsgemäß trägt, ist gemeint, dass der Anwender das Exoskelett angezogen - also angelegt - hat, und zwar exemplarisch dadurch, dass der Anwender das Rückenteil 8 rucksackartig auf seinem Rücken trägt, den Beckengurt 16 um seine Hüfte angelegt hat, der oder die die Schultergurte 19 über die Schulter oder die Schultern des Anwenders verlaufen und/oder ein oder beide Arme des Anwenders mit einer jeweiligen Armbefestigung 12 am jeweiligen Unterstützungsabschnitt 3 befestigt sind.

Exemplarisch ist das Exoskelett 20 ausgebildet, den Anwender bei einer Hebebewegung eines jeweiligen Arms, also bei einem nach oben gerichteten Verschwenken des jeweiligen Unterstützungsabschnitts 3 um eine jeweilige Hebeachse 36 mit einer jeweiligen, insbesondere nach oben wirkenden, Unterstützungskraft zu unterstützen. Ferner ist das Exoskelett 20 zweckmäßigerweise ausgebildet, den Anwender bei einer Senkbewegung, also bei einem nach unten gerichteten Verschwenken des jeweiligen Unterstützungsabschnitts 3 um eine jeweilige Hebeachse 36 mit einer jeweiligen insbesondere nach oben wirkenden Unterstützungskraft zu unterstützen oder entgegenzuwirken oder die jeweilige Unterstützungskraft bei der Senkbewegung zu deaktivieren oder zu reduzieren.

Bevorzugt verfügt die Steuereinrichtung 7 über wenigstens zwei manuell und/oder automatisch auswählbare Presets, die jeweils über wenigstens eine Preset-Charakteristik verfügen, die eine Unterstützungskraft-Vorgabe in Abhängigkeit von wenigstens einer Eingangsgröße, insbesondere einer Stellung des Unterstützungsabschnitts 3, festlegt. Die wenigstens zwei Presets unterscheiden sich in ihrer Preset-Charakteristik.

Die Presets können auch als Anwendungsprofile bezeichnet werden und die Preset-Charakteristiken können auch als Anwendungsprofil-Charakteristiken bezeichnet werden. Die Presets sind vorzugsweise in der Steuereinrichtung 7 gespeichert.

Insbesondere verfügt die Steuereinrichtung 7 wenigstens über ein erstes Preset mit einer ersten Preset-Charakteristik und ein zweites Preset mit einer zweiten Preset-Charakteristik. Die erste Preset-Charakteristik und die zweite Preset-Charakteristik legen jeweils die Unterstützungskraft-Vorgabe in Abhängigkeit von der wenigstens einen Eingangsgröße fest. Die erste Preset-Charakteristik unterscheidet sich von der zweiten Preset-Charakteristik.

Jede Preset-Charakteristik stellt eine Abbildung der wenigstens einen Eingangsgröße auf die Unterstützungskraft-Vorgabe dar. Beispielsweise umfasst jede Preset-Charakteristik eine Kennlinie, die die Unterstützungskraft-Vorgabe in Abhängigkeit von der wenigstens einen Eingangsgröße setzt. Beispielsweise definiert jede Preset-Charakteristik für jeden Wert des Wertebereichs der Eingangsgröße wenigstens einen jeweiligen Wert der Unterstützungskraft-Vorgabe. Insbesondere variiert die Kennlinie über den Wertebereich der Eingangsgröße. Die Kennlinie kann auch als Unterstützungskraft-Kennlinie bezeichnet werden. Beispielsweise ist jede Unterstützungskraft-Kennlinie eine über dem Wertebereich der Eingangsgröße variierende Unterstützungskraft-Kurve. Die Unterstützungskraft-Kennlinie kann beispielsweise Teil eines Unterstützungskraft-Kennfelds der jeweiligen Preset-Charakteristik sein.

Bevorzugt ist bei der ersten Preset-Charakteristik und/oder der zweiten Preset-Charakteristik eine Veränderung der Unterstützungskraft-Vorgabe in Abhängigkeit der Eingangsgröße definiert, sodass zweckmäßigerweise die Unterstützungskraft-Vorgabe nicht über den gesamten Wertebereich der Eingangsgröße konstant ist.

Die wenigstens eine Eingangsgröße umfasst vorzugsweise die Stellung des Unterstützungsabschnitts 3, die Stellung des Basisabschnitts 1 und/oder ein von dem Werkzeug 30 empfangenes Werkzeugsignal. Ferner kann die wenigstens eine Eingangsgröße eine Bewegungsrichtung des Unterstützungsabschnitts 3 und/oder eine frühere Stellung, beispielsweise ein früherer Schwenkwinkel 47, des Unterstützungsabschnitts 3 umfassen. Optional kann die Eingangsgröße ferner eine Geschwindigkeit, insbesondere eine Drehgeschwindigkeit, des Unterstützungsabschnitts 3 umfassen.

Die Stellung des Unterstützungsabschnitts 3 ist insbesondere die Orientierung des Unterstützungsabschnitts 3 relativ zum Basisabschnitt 1 oder relativ zur Schwerkraft. Beispielsweise ist die Stellung des Unterstützungsabschnitts 3 der Schwenkwinkel 47, insbesondere der aktuelle Schwenkwinkel 47. Vorzugsweise bildet jede Preset-Charakteristik den Schwenkwinkel 47 auf die Unterstützungskraft-Vorgabe ab.

Die Steuereinrichtung 7 ist ausgebildet, unter Verwendung eines aus den wenigstens zwei Presets ausgewählten Presets die Unterstützungskraft-Vorgabe in Abhängigkeit von der Eingangsgröße zu ermitteln und die Unterstützungskraft auf Basis der Unterstützungskraft-Vorgabe einzustellen.

Zweckmäßigerweise erfolgt also eine Auswahl aus dem ersten Preset und dem zweiten Preset - insbesondere automatisch oder manuell - und die Steuereinrichtung 7 verwendet das ausgewählte Preset, um die Unterstützungskraft-Vorgabe auf Basis der wenigstens einen Eingangsgröße zu ermitteln, insbesondere zu berechnen. Ein oder mehrere nicht ausgewählte Presets werden nicht für die Berechnung der Unterstützungskraft-Vorgabe verwendet. Auf Basis der ermittelten Unterstützungskraft-Vorgabe stellt die Steuereinrichtung 7 die Unterstützungskraft ein, zweckmäßigerweise durch Ansteuerung der Aktoreinrichtung 5, insbesondere der Ventileinheit 24.

Die Unterstützungskraft-Vorgabe entspricht zweckmäßigerweise der bereitzustellenden Aktorkraft und/oder der bereitzustellenden Unterstützungskraft und ist vorzugsweise identisch oder proportional zu der bereitzustellenden Aktorkraft und/oder der bereitzustellenden Unterstützungskraft. Beispielsweise entspricht die Unterstützungskraft-Vorgabe einem bereitzustellenden Druck in der Druckkammer des pneumatischen Antriebszylinders 31. Insbesondere ist die Unterstützungskraft-Vorgabe identisch oder proportional zu dem bereitzustellenden Druck in der Druckkammer.

Bevorzugt ist mittels des Bedienelements 14, insbesondere eines Unterstützungskraft-Eingabeelements 515, und/oder mittels des Mobilgeräts 40 die ermittelte Unterstützungskraft-Vorgabe durch den Anwender skalierbar, um eine skalierte Unterstützungskraft-Vorgabe bereitzustellen.

Die Steuereinrichtung 7 ist ausgebildet, die Unterstützungskraft gemäß der skalierten Unterstützungskraft-Vorgabe einzustellen.

Die skalierte Unterstützungskraft-Vorgabe ist insbesondere proportional zu der (nicht-skalierten) Unterstützungskraft-Vorgabe. Die skalierte Unterstützungskraft-Vorgabe weist insbesondere die gleiche Kurvenform auf wie die (nichtskalierte) Unterstützungskraft-Vorgabe. Beispielsweise berechnet die Steuereinrichtung 7 die skalierte Unterstützungskraft-Vorgabe durch eine Multiplikation der (nicht-skalierten) Unterstützungskraft-Vorgabe mit einem Skalierungsfaktor.

Bevorzugt kann der Anwender die Skalierung durch Eingabe des Skalierungsfaktors mit dem Bedienelement 14, insbesondere dem Unterstützungskraft-Eingabeelement 515, und/oder dem Mobilgerät 40 festlegen.

Optional kann ein Kraftniveau der Unterstützungskraft über das Bedienelement 14 eingestellt werden. Beispielsweise ist das Kraftniveau die Skalierung. Beispielsweise kann das Kraftniveau und/oder die Skalierung ausschließlich über das Bedienelement 14, insbesondere ein Unterstützungskraft-Eingabeelement 515, eingestellt werden.

Im Folgenden soll näher auf das Bedienelement 14 eingegangen werden.

Zunächst sollen die Eingabeelemente 502 des Bedienelements 14 erläutert werden. Exemplarisch umfasst das Bedienelement 14 als die Eingabeelemente 502 ein Pause-Eingabeelement 510, ein Preset-Auswahl-Eingabeelement 511, ein Unterstützungskraft-Eingabeelement 515, ein Kommunikations-Eingabeelement 517 und/oder ein Ein-Aus-Eingabeelement 518. Die genannten Eingabeelemente 510, 511, 515, 517, 518 unterscheiden sich zweckmäßigerweise in ihrer Form, insbesondere derart, dass jedes dieser Eingabeelemente eine andere Form als die anderen dieser Eingabeelemente hat. Jedes Eingabeelement 510, 511, 515, 517, 518 hat unter den Eingabeelementen 510, 511, 515, 17, 518, insbesondere unter sämtlichen Eingabeelementen 502, eine einmalige Form.

Das Pause-Eingabeelement 510 ist exemplarisch als Taste ausgeführt und insbesondere an der Vorderseite 503 angeordnet, vorzugsweise mittig.

Das Preset-Auswahl-Eingabeelement 511 ist exemplarisch als Taste ausgeführt und insbesondere an der zweiten seitlichen Seite 506, insbesondere in der unteren Hälfe der zweiten seitlichen Seite 506, angeordnet.

Das Unterstützungskraft-Eingabeelement 515 ist exemplarisch als Drehrad ausgeführt. Die Drehachse des Unterstützungskraft-Eingabeelements 515 ist zweckmäßigerweise normal zur Vorderseite 503 und/oder parallel zur x-Richtung ausgerichtet. Das Unterstützungskraft-Eingabeelement 515 ist teilweise im Bedienelement-Gehäuse 519 angeordnet und ragt exemplarisch an der ersten seitlichen Seite 505 und/oder an der zweiten seitlichen Seite 506 aus dem Bedienelement-Gehäuse 519 heraus. Das Unterstützungskraft-Eingabeelement 515 ist zweckmäßigerweise mittig angeordnet, insbesondere in x-Richtung hinter dem Pause-Eingabeelement 510.

Das Kommunikations-Eingabeelement 517 ist exemplarisch als Taste ausgeführt und insbesondere an der ersten seitlichen Seite 505, insbesondere in der unteren Hälfte der ersten seitlichen Seite 505, angeordnet.

Das Ein-Aus-Eingabeelement 518 ist exemplarisch als Taste ausgeführt und insbesondere an der Oberseite 507 angeordnet, insbesondere auf der an die erste seitliche Seite 505 angrenzenden Hälfte der Oberseite 507. Vorzugsweise grenzt das Ein-Aus-Eingabeelement 518 an die erste seitliche Seite 505 an.

In einem Zustand, in dem der Anwender das Bedienelement 14 mit seiner Hand, insbesondere der rechten Hand, hält und umgreift, insbesondere derart, dass die Rückseite 504 an der Handfläche anliegt, kann der Anwender aufgrund der Anordnung der Eingabeelemente 502 sämtliche Eingabeelemente 502 mit den Fingern seiner rechten Hand betätigen, beispielsweise das Pause-Eingabeelement 510 mit seinem rechten Daumen, das Preset-Auswahl-Eingabeelement 511 mit seinem rechten Ringfinger und/oder seinem rechten kleinen Finger, das Unterstützungskraft-Eingabeelement 515 mit seinem rechten Daumen und/oder seinem rechten Mittelfinger, das Kommunikations-Eingabeelement 517 mit seinem rechten Daumen, und/oder das Ein-Aus-Eingabeelement 518 mit seinem rechten Daumen und/oder seinem rechten Zeigefinger.

Im Folgenden soll auf die Funktion der einzelnen Eingabeelemente 502 eingegangen werden.

Über das Pause-Eingabeelement 510 ist das Exoskelett 20 in einen Pause-Zustand versetzbar, in dem die Unterstützungskraft abgeschaltet ist und das Exoskelett 20 weiterhin eingeschaltet ist.

Bevorzugt umfasst das Exoskelett 20 den Drucklufttank 25 zur Bereitstellung von Druckluft für die Aktoreinrichtung 5, wobei im Pause-Zustand ein für eine Betätigung der Aktoreinrichtung 5 benötigter Versorgungsdruck im Drucklufttank 25 aufrechterhalten wird, insbesondere vom Exoskelett 20. Beispielsweise ist das Exoskelett 20 ausgebildet, im Pause-Zustand den pneumatischen Antriebszylinder 31, insbesondere eine Druckkammer des Antriebszylinders 31, zu entlüften, um die Unterstützungskraft abzuschalten, und vorzugsweise im Pause-Zustand den Drucklufttank 25 nicht zu entlüften und insbesondere belüftet, insbesondere bedruckt, zu lassen.

Optional ist die Steuereinrichtung 7 ausgebildet, bei einem Verlassen des Pause-Zustands die Unterstützungskraft gemäß einem vor Einnahme des Pause-Zustands festgelegten Kraftniveaus einzustellen.

Optional ist die Steuereinrichtung 7 ausgebildet, bei Verlassen des Pause-Zustands die Unterstützungskraft auf Basis eines vor Einnahme des Pause-Zustands ausgewählten Presets einzustellen.

Das Exoskelett 20 kann insbesondere wie folgt betrieben werden: Wenn sich das Exoskelett 20 nicht in dem Pause-Zustand befindet, kann ein Betätigen des Pause-Eingabeelements 510 erfolgen, wodurch das Exoskelett in den Pause-Zustand versetzt wird. Wenn sich das Exoskelett 20 in dem Pause-Zustand befindet, kann ein Betätigen des Pause-Eingabeelements 510 erfolgen, wodurch das Exoskelett 20 den Pause-Zustand verlässt.

Vorzugsweise kann das Exoskelett 20 mittels des Pause-Eingabeelements 510 kraftlos geschaltet, insbesondere temporär kraftlos geschaltet werden, wobei das Exoskelett 20 vorzugsweise zuletzt verwendete Einstellungen, insbesondere ein zuletzt verwendetes Preset, beibehält. Optional wird das Kraftniveau und/oder die Skalierung der Unterstützungskraft-Vorgabe vom Exoskelett 20 bei der Einnahme des Pause-Zustands auf null gesetzt und bleibt bei Verlassen des Pause-Zustands auf null, bis der Anwender das Kraftniveau und/oder die Skalierung mittels des Unterstützungskraft-Eingabeelements 515 auf einen Wert größer als null einstellt.

Der Pause-Zustand kann beispielsweise in kurzen Arbeitspausen oder bei einer Ausführung von Nebentätigkeiten ohne aktive Kraftunterstützung durch das Exoskelett 20 eingenommen werden.

Vorzugsweise ist das Pause-Eingabeelement 510 die größte Taste des Bedienelements 14.

Das Exoskelett ist insbesondere als hydraulisch oder pneumatisch betriebenes Exoskelett ausgeführt und die Aktoreinrichtung 5 wird im Pause-Modus zweckmäßigerweise durch ein Öffnen eines Ventils der Ventileinheit 24 kraftlos geschaltet.

Optional kann das Exoskelett als die Aktoreinrichtung einen oder mehrere elektrische Motoren aufweisen. In diesem Fall kann im Pause-Zustand eine Trennung des Unterstützungsabschnitts von der Aktoreinrichtung, insbesondere einem elektrischen Motor, erfolgen, um die Unterstützungskraft abzuschalten. Beispielsweise umfasst das Exoskelett einen Trenn-Aktuator, der die Aktoreinrichtung, insbesondere den elektrischen Motor, von dem Unterstützungsabschnitt trennt, beispielsweise durch eine Magnetkupplung.

Optional speichert das Exoskelett 20 beim Betätigen des Pause-Eingabeelements 510 das verwendete Preset und reduziert beispielsweise die Unterstützungskraft graduell bis auf null, optional über mehrere Sekunden, beispielsweise über einen Zeitraum von 1s bis 5s. Bei Verlassen des Pause-Zustands müssen vor Einnahme des Pause-Zustands vorgenommene Einstellungen - wie eine Auswahl des Presets - nicht erneut vorgenommen werden. Ferner behält das Exoskelett 20 bei Einnahme und/oder Verlassen des Pause-Zustands eine vorhandene Kopplung, insbesondere eine Bluetooth-Kopplung, mit einem anderen Gerät, beispielsweise dem Werkzeug 30 und/oder dem Mobilgerät 40, bei.

Bevorzugt umfasst das Bedienelement 14 ferner ein Preset-Auswahl-Eingabeelement 511, mit dem wenigstens eines der Presets auswählbar ist. Insbesondere kann durch Betätigung des Preset-Auswahl-Eingabeelements 511 zwischen mehreren Presets umgeschaltet werden.

Exemplarisch ist das Preset-Auswahl-Eingabeelement 511 auf einer dem Kommunikations-Eingabeelement 517 gegenüber liegenden Seite angeordnet. Zweckmäßigerweise unterscheidet sich das Preset-Auswahl-Eingabeelement 511 von dem Kommunikations-Eingabeelement 517 in Form und/oder Größe. Das Preset-Auswahl-Eingabeelement 511 ist insbesondere größer als das Kommunikations-Eingabeelement 517, vorzugsweise doppelt so groß oder doppelt so lang wie das Kommunikations-Eingabeelement 517. Zweckmäßigerweise wird eine Betätigung des Preset-Auswahl-Eingabeelements 511 nur dann vom Exoskelett 20 als Anwendereingabe erkannt, wenn die Betätigung kürzer als oder gleich einer für das Preset-Auswahl-Eingabeelement 511 geltenden Tastendruckzeit, beispielsweise kürzer als oder gleich 3s, ist.

Optional kann über das Bedienelement 14, insbesondere das Preset-Auswahl-Eingabeelement 511, nur zwischen einer begrenzten Anzahl von Presets, insbesondere maximal vier Presets, beispielsweise drei herstellerseitig hinterlegten Presets und einem vom Anwender definierten Preset, hin- und hergeschaltet werden.

Optional ist das Exoskelett 20 ausgebildet, ein oder mehrere zusätzliche Presets automatisch zu aktivieren, beispielsweise auf Basis einer Kommunikation mit dem Werkzeug 30, insbesondere in Ansprechen darauf, dass das Werkzeug 30 über Bluetooth mit dem Exoskelett 20 gekoppelt wird.

Bevorzugt verfügt das Bedienelement 514 über ein als Drehrad ausgebildetes Unterstützungskraft-Eingabeelement 515, über das das Kraftniveau der Unterstützungskraft einstellbar ist.

Das Unterstützungskraft-Eingabeelement 515 dient zweckmäßigerweise der Einstellung des Kraftniveaus der Unterstützungskraft, beispielsweise mittels einer Einstellung der Skalierung der Unterstützungskraft-Vorgabe. Das Unterstützungskraft-Eingabeelement 515 ist vorzugsweise als Endlosdrehrad ausgeführt. Zweckmäßigerweise ist das Exoskelett 20 ausgebildet, das Kraftniveau und/oder die Skalierung bei jedem Neustart des Exoskeletts und/oder nach jedem Aufheben des Pause-Zustands auf null zu setzen. Zweckmäßigerweise muss der Anwender jedes Mal, nachdem das Kraftniveau und/oder die Skalierung auf null gesetzt wurde, das Kraftniveau und/oder die Skalierung mittels des Unterstützungskraft-Eingabeelements 515 einstellen, um eine Unterstützungskraft größer null zu bewirken.

Optional ist das als Drehrad ausgeführte Unterstützungskraft-Eingabeelement 515 mit einer Rasterung versehen, durch die eine Verstellung des Drehrades durch einfaches Vorbeistreifen mit der Kleidung verhindert werden kann.

Über das Kommunikations-Eingabeelement 517 lässt sich zweckmäßigerweise eine drahtlose Kommunikationsverbindung, insbesondere eine Bluetooth-Verbindung, mit einem externen Gerät, insbesondere dem Werkzeug 30 und/oder dem Mobilgerät 40, herstellen. Insbesondere kann über Betätigung des Kommunikations-Eingabeelements 517 ein Bluetooth-Pairing-Modus eingenommen werden.

Zweckmäßigerweise wird eine Betätigung des Kommunikations-Eingabeelements 517 nur dann vom Exoskelett 20 als Anwendereingabe erkannt, wenn die Betätigung länger als eine für das Kommunikations-Eingabeelements 517 geltende Tastendruckzeit, beispielsweise länger als 3s, erfolgt.

Über das Ein-Aus-Eingabeelement 518 kann das Exoskelett 20 eingeschaltet und ausgeschaltet werden. Zweckmäßigerweise wird eine Betätigung des Ein-Aus-Eingabeelement 518 nur dann vom Exoskelett 20 als Anwendereingabe erkannt, wenn die Betätigung länger als eine für das Ein-Aus-Eingabeelement 518 geltende Tastendruckzeit, beispielsweise 2s, erfolgt.

Optional verfügt das Bedienelement 14 über wenigstens ein Preset-Konfigurations-Eingabeelement, mit dem wenigstens eine Preset-Charakteristik konfigurierbar und/oder ein Preset konfigurierbar und/oder auswählbar ist. Beispielsweise ist das Preset-Konfigurations-Eingabeelement die erste Zusatz-Taste 521 oder die zweite Zusatz-Taste 522.

Beispielsweise kann das Exoskelett 20 ausgebildet sein, in Ansprechen auf eine Betätigung des Preset-Konfigurations-Eingabeelements eine charakteristische Bewegung des Anwenders, insbesondere des Arms 4 des Anwenders, zu detektieren und auf Basis der detektierten Bewegung ein Preset auszuwählen und/oder zu konfigurieren. Insbesondere kann das Exoskelett 20 ausgebildet sein, in Ansprechen auf eine Betätigung des Preset-Konfigurations-Eingabeelements eine Bewegung des Anwenders, insbesondere des Arms 4 des Anwenders, aufzuzeichnen und auf Basis der aufgezeichneten Bewegung ein Preset zu erstellen und/oder zu speichern.

Optional kann der Anwender durch Betätigung des Preset-Konfigurations-Eingabeelements das Exoskelett 20 in einen Lernmodus versetzen, in dem zweckmäßigerweise ein von dem Unterstützungsabschnitts 3 aktuell eingenommener Schwenkwinkel 47 als Konfigurationsparameter eines Presets gespeichert wird. Der Konfigurationsparameter legt beispielsweise fest, bei welchem Schwenkwinkel 47 eine Bereitstellung der Unterstützungskraft beginnen soll, insbesondere bei einer Hebebewegung des Unterstützungsabschnitts 3. Insbesondere kann der Konfigurationsparameter festlegen, ab welchem Schwenkwinkel 47 ein konstantes Kraftniveau der Unterstützungskraft bereitgestellt werden soll. Optional kann der Konfigurationsparameter einen Schwenkwinkel 47 für eine Ruhestellung festlegen, bei dem (insbesondere bei einer Senkbewegung des Unterstützungsabschnitts 3) ein Anstieg der Unterstützungskraft erfolgen soll, so dass der Anwender bei diesem Schwenkwinkel 47 seinen Arm 4 auf dem Unterstützungsabschnitt 3 ablegen kann und der Arm 4 von dem Unterstützungsabschnitt in diesem Schwenkwinkel 47 gehalten wird.

Optional kann der Anwender im Lernmodus durch Bewegung des Unterstützungsabschnitts 3 mit seinem Arm 4 eine gewünschte Geschwindigkeit einer Bewegung vorgeben und als Konfigurationsparameter eines Presets speichern. In diesem Fall ist die Aktoreinrichtung insbesondere als elektrische Aktoreinrichtung - insbesondere als Elektromotor - ausgeführt.

Optional sind ein erstes und ein zweites Preset-Konfigurations-Eingabeelement vorhanden, beispielsweise die erste Zusatz-Taste 521 und die zweite Zusatz-Taste 522. Beispielsweise dient das erste Preset-Konfigurations-Eingabeelement zur Einstellung des Schwenkwinkels 47, ab dem die Unterstützungskraft bereitgestellt werden soll und/oder ab dem das konstante Kraftniveau bereitgestellt werden soll und/oder das zweite Preset-Konfigurations-Eingabeelement dient dazu, den Schwenkwinkel 47 für die Ruhestellung einzustellen.

Optional kann mittels der beiden Preset-Konfigurations-Eingabeelemente die Unterstützungskraft in zwei Bewegungsrichtungen (Aufwärts-/Abwärtsbewegung) moduliert werden. Optional kann das Exoskelett 20 ausgebildet sein, Stellungen, insbesondere Schwenkwinkel, des Unterstützungsabschnitts 3 im Lernmodus getrennt nach Auf- und Abwärtsbewegung zu erfassen, wobei ein Preset-Konfigurations-Eingabeelement der Aufwärtsbewegung und ein anderes Preset-Konfigurations-Eingabeelement der Abwärtsbewegung zugeordnet ist.

Ferner kann ein Preset-Konfigurations-Eingabeelement einem Lernmodus für den ersten Unterstützungsabschnitt 3 zugewiesen sein und ein anderes Preset-Konfigurations-Eingabeelement einem Lernmodus für den zweiten Unterstützungsabschnitt 3 zugewiesen sein. Insbesondere können über die Preset-Konfigurations-Eingabeelemente getrennt Konfigurationsparameter für eine Kraftunterstützung des linken Arms und eine Kraftunterstützung des rechten Arms definiert sein. Vorzugsweise ist das dem linken Arm zugeordnete Preset-Konfigurations-Eingabeelement dem linken Arm zugewandt angeordnet und das dem rechten Arm zugeordnete Preset-Konfigurations-Eingabeelement dem rechten Arm zugewandt angeordnet.

Optional weist die Form des Bedienelements 14 in Draufsicht nur oder höchstens eine Symmetrieachse auf, sodass der Anwender durch Ertasten des Bedienelements 14 eine gewünschte Taste finden kann.

Im Folgenden soll auf die Anzeigeelemente 509 eingegangen werden. Die Anzeigeelemente 509 umfassen insbesondere ein Unterstützungsbereich-Anzeigeelement 512, ein Unterstützungskraft-Anzeigeelement 514, eine Preset-Typ-Anzeige 524, ein Status-Anzeigeelement 525 und/oder ein Kommunikations-Anzeigeelement 526.

Bevorzugt ist die Steuereinrichtung 7 ausgebildet, die Unterstützungskraft in Abhängigkeit von einer Eingangsgröße, insbesondere einer Stellung, exemplarisch des Schwenkwinkels 47, des Unterstützungsabschnitts 3, einzustellen. Das Bedienelement 14 weist ein Unterstützungsbereich-Anzeigeelement 512 auf. Das Exoskelett 20, insbesondere die Steuereinrichtung 7, ist ausgebildet, über das Unterstützungsbereich-Anzeigeelement 512 einen Unterstützungsbereich der Eingangsgröße, insbesondere des Schwenkwinkels 47, anzuzeigen, in dem die Unterstützungskraft bereitgestellt wird und/oder einen Unterstützungsbereich der Eingangsgröße, insbesondere des Schwenkwinkels 47, anzuzeigen, in dem die Unterstützungskraft nicht bereitgestellt wird. Insbesondere ist das Exoskelett 20 ausgebildet, über das Unterstützungsbereich-Anzeigeelement 512 den Unterstützungsbereich eines aktuell ausgewählten Presets anzuzeigen.

Exemplarisch verfügt das Unterstützungsbereich-Anzeigeelement 512 über mehrere Anzeigebereiche 523, die insbesondere separat aufleuchten können. Zweckmäßigerweise ist jeder Anzeigebereich 523 einem anderen Wertebereich der Eingangsgröße, insbesondere des Schwenkwinkels 47, zugeordnet. Das Exoskelett 20 ist ausgebildet, jeden Anzeigebereich 523 für dessen zugeordneten Wertebereich der Eingangsgröße, insbesondere des Schwenkwinkels 47, eine Unterstützungskraft größer null definiert ist, beispielsweise in einem ausgewählten Preset, anzuzeigen, insbesondere aufleuchten zu lassen, und/oder jeden Anzeigebereich 523 für dessen zugeordneten Wertebereich der Eingangsgröße, insbesondere des Schwenkwinkels 47, keine Unterstützungskraft größer null definiert ist, nicht anzuzeigen, insbesondere nicht aufleuchten zu lassen, oder anders anzuzeigen, insbesondere anders aufleuchten zu lassen.

Optional kann das Exoskelett 20 ausgebildet sein, mit jedem Anzeigebereich 523 eine dem vorgegebenen Kraftniveau entsprechende Indikation anzuzeigen, beispielsweise indem das Exoskelett 20 die jeweilige Helligkeit jedes Anzeigebereichs 523 gemäß dem jeweils zugeordneten vorgegebenen Kraftniveau einstellt und/oder indem das Exoskelett 20 eine jeweilige Größe, insbesondere eine jeweilige Breite, eines jeweiligen anzuzeigenden, insbesondere aufzuleuchtenden, Teilbereichs jedes Anzeigebereichs 523 gemäß dem jeweils zugeordneten vorgegebenen Kraftniveau einstellt. Insbesondere zeigt das Exoskelett 20 die Indikation mittels einer Variation in der Helligkeit zwischen den Anzeigebereichen 523 oder einer angezeigten Breite des jeweiligen Anzeigebereichs 523 an.

Exemplarisch zeigt das Unterstützungsbereich-Anzeigeelement 512 das verwendete Preset, insbesondere den durch das verwendete Preset definierten Unterstützungsbereich, beispielsweise eine Arbeitshöhe, an. Exemplarisch umfasst das Unterstützungsbereich-Anzeigeelement 512 eine Darstellung, insbesondere ein Piktogramm, in Gestalt einer Person, beispielsweise eines Männchens. Exemplarisch umfasst die Darstellung, insbesondere das Piktogramm, einen Kopf, Torso und Arme. Die Anzeigebereiche 523 sind exemplarisch neben und/oder um die Darstellung herum angeordnet, insbesondere derart, dass bei jedem Anzeigebereich 523 der jeweils zugeordnete Wertebereich der vertikalen Position desjenigen Körperabschnitts der Darstellung entspricht, neben der der Anzeigebereich 523 angeordnet ist.

Exemplarisch sind die Anzeigebereiche 523 als horizontale Balken ausgeführt, die durch die Darstellung, insbesondere das Piktogramm, unterbrochen werden.

Durch das Piktogramm kann das Risiko einer Fehlinterpretation der Anzeigebereiche 523 reduziert werden, beispielsweise, wenn das Bedienelement 14 auf dem Kopf gedreht gehalten wird. Der Unterstützungsbereich ist derjenige Bereich, in dem der Anwender eine aktive Kraftunterstützung durch den Unterstützungsabschnitt 3 erfährt. Das Unterstützungsbereich-Anzeigeelement 512 ist exemplarisch in die drei Anzeigebereiche 523 unterteilt, die insbesondere als drei horizontale Abschnitte ausgeführt sind, die unterschiedliche Unterstützungsbereiche des aktivierten Presets darstellen. Optional kann das Unterstützungsbereich-Anzeigeelement 512 mehr oder weniger als drei Anzeigebereiche, insbesondere drei horizontale Abschnitte, aufweisen.

Optional umfasst das Bedienelement 14 ferner eine Preset-Typ-Anzeige 524 zur Anzeige des Typs des aktuell ausgewählten Presets. Beispielsweise ist das Exoskelett 20 ausgebildet, mit der Preset-Typ-Anzeige 524 anzuzeigen, ob es sich bei dem aktuell ausgewählten Preset um ein vom Anwender konfiguriertes Preset handelt oder nicht. Beispielsweise lässt das Exoskelett 20 die Preset-Typ-Anzeige 524 in Ansprechen darauf aufleuchten, dass das aktuell ausgewählte Preset ein vom Anwender konfiguriertes Preset ist, und lässt die Preset-Typ-Anzeige 524 in Ansprechen darauf nicht aufleuchten, dass das aktuell ausgewählte Preset kein vom Anwender konfiguriertes Preset, sondern beispielsweise ein herstellerseitig hinterlegtes Preset, ist. Exemplarisch ist die Preset-Typ-Anzeige 524 als horizontaler Anzeigebalken unter dem Unterstützungsbereich-Anzeigeelement 512 ausgeführt.

Optional umfasst das Bedienelement 14 ein Display, beispielsweise ein LCD-Display. Zweckmäßigerweise kann das Display ausgebildet sein, die Funktionen der Preset-Typ-Anzeige 524, des Unterstützungsbereich-Anzeigeelements 512 und/oder des Status-Anzeigeelements 526 abzubilden, insbesondere anzuzeigen.

Bevorzugt umfasst das Bedienelement 14 ein Unterstützungskraft-Anzeigeelement 514. Das Exoskelett 20, insbesondere die Steuereinrichtung 7, ist ausgebildet, über das Unterstützungskraft-Anzeigeelement 514 ein Kraftniveau der Unterstützungskraft anzuzeigen, insbesondere kontinuierlich oder in mehreren verschiedenen Stufen. Das Unterstützungskraft-Anzeigeelement 514 ist exemplarisch ringabschnittsförmig ausgeführt und/oder über dem Pause-Eingabeelement 510 angeordnet. Zweckmäßigerweise ist das Exoskelett 20 ausgebildet, bei einer Drehung des Unterstützungskraft-Eingabeelements 515 eine jeweils eingestellte Kraftniveaustufe durch eine Beleuchtung in dem Unterstützungskraft-Anzeigeelement 514 zu visualisieren, insbesondere entsprechend einer aktuellen Drehrichtung des Unterstützungskraft-Eingabeelements 515. Zweckmäßigerweise ist das ringabschnittsförmige Unterstützungskraft-Anzeigeelement 514 konzentrisch mit dem Unterstützungskraft-Eingabeelements 515 angeordnet. Auf diese Weise kann ein intuitives Verständnis des Unterstützungskraft-Anzeigeelements 514 durch den Anwender erzielt werden.

Das Status-Anzeigeelement 525 dient zur Anzeige des aktuellen Status des elektrisch betreibbaren Geräts 70, insbesondere des Exoskeletts 20 oder des Saugers 80. Beispielsweise ist das elektrisch betreibbare Gerät 70, insbesondere das Exoskelett 20 oder der Sauger 80, ausgebildet, mittels des Status-Anzeigeelements 525 als Status den Pause-Zustand, einen Fehler-Zustand und/oder einen Ladestand des einen oder der mehreren Akkus 22 anzuzeigen.

Beispielsweise zeigt das elektrisch betreibbare Gerät 70, insbesondere das Exoskelett 20 oder der Sauger 80, durch ein erstes optisches Ausgabesignal, beispielsweise ein grünes Aufleuchten, des Status-Anzeigeelements 525 einen fehlerfreien und betriebsbereiten Zustand des elektrisch betreibbaren Geräts 70, insbesondere des Exoskeletts 20 oder des Saugers 80, an. Insbesondere wird dieser Zustand nach einem Einschalten des elektrisch betreibbaren Geräts 70, insbesondere des Exoskeletts 20 oder des Saugers, angezeigt. Optional werden erst bei Betätigung des Unterstützungskraft-Eingabeelements 515 oder eines anderen Eingabeelements 502 andere Informationen über das Status-Anzeigeelement 525 angezeigt.

Optional zeigt das Status-Anzeigeelements 525 ein zweites optisches Ausgabesignal, insbesondere ein pulsierendes rotes Aufleuchten, an, in Ansprechen darauf, dass der Ladestand des einen oder der mehreren Akkus 22 einen Schwellenwert unterschritten hat. Vorzugsweise zeigt das Bedienelement an, welcher der mehreren Akkus 22 einen Schwellenwert des Ladestandes unterschritten hat.

Optional zeigt das Status-Anzeigeelement 525 ein drittes optisches Ausgabesignal, beispielsweise ein konstantes rotes Aufleuchten, an, in Ansprechen darauf, dass ein Fehler vorliegt. Vorzugsweise deaktiviert das elektrisch betreibbare Gerät 70, insbesondere das Exoskelett 20 oder der Sauger 80, in diesem Fall die anderen Anzeigeelemente 509.

Vorzugsweise zeigt das Status-Anzeigeelement 526 ein viertes optisches Ausgabesignal, beispielsweise ein pulsierendes grünes Aufleuchten, an, in Ansprechen darauf, dass der Pause-Zustand vorliegt.

Das Kommunikations-Anzeigeelement 526 dient insbesondere zur Anzeige eines Zustands einer Kommunikationsverbindung, insbesondere einer Bluetooth-Verbindung, mit einem externen Gerät, beispielsweise dem Werkzeug 30 und/oder dem Mobilgerät 40. Beispielsweise blinkt das Kommunikations-Anzeigeelement 526 während einer Pairing-Prozedur blau. Nach erfolgreichem Pairing leuchtet das Kommunikations-Anzeigeelement 526 konstant blau auf. Das Kommunikations-Anzeigeelement 526 ist vorzugsweise nahe an dem Kommunikations-Eingabeelement 517 angeordnet.

Zweckmäßigerweise kann ein Kommunikationsmodul, beispielsweise ein Bluetooth-Modul, und/oder ein Identifikationsmodul, beispielsweise ein RFID-Chip, des elektrisch betreibbaren Geräts 70 in dem Bedienelement 14 angeordnet sein. Optional erfolgt die Kommunikation und/oder Identifikation des elektrisch betreibbaren Geräts 70, insbesondere des Exoskeletts 20 oder Saugers 80, mit dem Werkzeug 30 und/oder dem Mobilgerät 40 über das Bedienelement 14.

Optional ist das elektrisch betreibbare Gerät 70, insbesondere das Exoskelett 20 oder der Sauger 80, ausgebildet, mittels des Bedienelements 14 ein Vibrationssignal und/oder ein akustisches Signal auszugeben, um dem Anwender einen aktuellen Zustand des elektrisch betreibbaren Geräts 70, insbesondere des Exoskeletts 20 oder des Saugers 80, anzuzeigen.

Optional weist das Bedienelement 14 eine Vibrationsfunktion auf, mit deren Hilfe der Anwender auf bestimmte (abnormale oder besondere) Status oder Statusänderungen aufmerksam gemacht wird. Ein solcher abnormaler Status kann beispielsweise eine Fehlermeldung oder das Unterschreiten eines bestimmten Ladestands des/der Akkus 22 sein.

Optional ist das Bedienelement 14 ausgebildet, ein akustisches Signal, beispielsweise einen Piepton oder eine Folge von Pieptönen, auszugeben, mit dessen Hilfe der Anwender auf bestimmte (abnormale oder besondere) Status oder Statusänderungen aufmerksam gemacht wird.

Vorzugsweise ist das Bedienelement 14 mit dem Basisabschnitt 1, insbesondere dem Rückenteil 8, des Exoskeletts 20 über ein Kabel, insbesondere das Bedienelement-Kabel 15, verbunden.

Vorzugsweise wird das Bedienelement 14 über das Bedienelement-Kabel 15 mit Strom versorgt und benötigt keinen eigenen Akku oder Batterien.

Zweckmäßigerweise ist die Kabellänge des Bedienelement-Kabels 15 nicht variabel und/oder das Bedienelement-Kabel 15 ist nicht streckbar, insbesondere kein Spiralkabel. Dies hat den Vorteil, dass das Bedienelement 14 auch an dem Bedienelement-Kabel 15 umherbaumeln kann und der Anwender trotzdem intuitiv weiß, wo er nach dem Bedienelement 14 tasten muss.

Optional ist das Kabel, insbesondere das Bedienelement-Kabel 15, formstabil ausgeführt und verfügt über eine ausreichend hohe Biegesteifigkeit, so dass das Bedienelement 14 durch das Kabel aufgrund der Biegesteifigkeit des Kabels an einer Position im Raum gehalten wird.

Exemplarisch wird das Bedienelement-Kabel 15 am oder im Schultergurt 19 zum Rückenteil 8 geführt. Beispielsweise weist der Schultergurt 19 eine insbesondere durch Druckknöpfe verschließbare Tasche 527 auf, durch die das Bedienelement-Kabel 15 geführt wird.

Zweckmäßigerweise ist das Bedienelement 14 mittels des Befestigungselements 520 am Schultergurt 19, insbesondere an einer Befestigungsstelle am Schultergurt 19, befestigbar. Im am Schultergurt 19 befestigten Zustand befindet sich das Bedienelement 14 (insbesondere bei nach unten ausgerichtetem Unterstützungsabschnitt 3) exemplarisch auf einer Höhe zwischen der Armbefestigung 12 und der Schultergelenkanordnung 9, insbesondere auf Brusthöhe des Anwenders.

Die Figur 12 zeigt ein nicht beanspruchtes, technisches Beispiel, bei dem das elektrisch betreibbare Gerät 70 als Sauger 80 ausgebildet ist. Der Sauger 80 ist insbesondere ein Staubsauger. Der Sauger 80 umfasst die Aktor- und/oder Antriebseinrichtung 501, die als eine in dem Basisabschnitt 1 untergebrachte Saugeinheit 516 ausgeführt ist. Der Sauger 80 umfasst ferner einen mit der Saugeinheit 516 verbundenen Saugschlauch 529. An dem Saugschlauch 529 ist exemplarisch ein Schlauchstutzen 528 angeordnet.

Exemplarisch verfügt der Sauger 80 über einen oder zwei Schultergurte 19 und kann insbesondere auf einem Rücken des Anwenders getragen werden.

Der Sauger 80 umfasst das Bedienelement 14. In der Figur 12 sind zwei bevorzugte Positionierungen des Bedienelements 14 gezeigt, wobei zweckmäßigerweise jeweils nur eine Positionierung vorliegt - und insbesondere nur ein Bedienelement 14 vorhanden ist.

Bevorzugt ist das Bedienelement 14 an dem Schlauchstutzen 528 befestigt, insbesondere fest montiert oder mit einer Lasche oder einem Clip befestigt. Der Anwender kann bei der Arbeit mit einem mit dem Sauger 80 gekoppelten Elektrowerkzeug den Sauger 80 über das Bedienelement 14 bedienen. Optional wird ein Verbindungskabel zusammen mit dem Saugschlauch 529 zum Basisabschnitt 1 geführt oder die Kommunikation mit dem Basisabschnitt 1 erfolgt über Bluetooth.

Insbesondere in dem Fall, in dem der Sauger 80 ein von dem Anwender auf dem Rücken getragener Sauger 80 ist, kann das Bedienelement 14 an dem Schultergurt 19, einem Gürtel oder einem Beckengurt befestigt sein und/oder über das Bedienelement-Kabel 15 mit dem Basisabschnitt 1 verbunden sein. Ferner kann das Bedienelement an der Kleidung des Anwenders angebracht sein und/oder über Bluetooth mit dem Basisabschnitt 1 kommunizieren.

Zweckmäßigerweise umfasst das Bedienelement 14 als Eingabeelement ein Drehrad zur Einstellung der Saugleistung. Ferner kann das Bedienelement 14 als Eingabeelement eine Taste umfassen, um ein manuelles Abreinigen eines Filters des Saugers 80 zu veranlassen.

Optional wird ein Bedienelement 14 bereitgestellt, das mit verschiedenen elektrischen Geräten, beispielsweise dem Exoskelett 20, dem Sauger 80, einem Leuchtstrahler einem Lautsprecher und/oder dem Werkzeug 30, verbindbar ist, insbesondere mittels Bluetooth. Beispielsweise umfasst das Bedienelement 14 eine Taste, mit der zwischen verschiedenen, mit dem Bedienelement 14 gekoppelten elektrischen Geräten hin und her geschaltet werden kann. Optional umfasst das Bedienelement eine Anzeige, beispielsweise eine LCD-Anzeige, die anzeigt, welches der gekoppelten elektrischen Geräte aktuell mit dem Bedienelement 14 bedient werden kann.

Beispielsweise kann mit dem Bedienelement 14 über das Drehrad eine Leuchtstärke des Leuchtstrahlers eingestellt werden und/oder eine Lautstärke eines über Bluetooth verbundenen Lautsprechers eingestellt werden.

## Patentansprüche

1. Elektrisch betreibbares Gerät (70), das als Exoskelett (20) ausgeführt ist, umfassend:
- einen Basisabschnitt (1) zur Anbringung an einen Körperabschnitt, insbesondere den Torso (2), des menschlichen Körpers,
- eine Aktor- und/oder Antriebseinrichtung (501),
- eine Steuereinrichtung (7) zur Ansteuerung der Aktor- und/oder Antriebseinrichtung (501), und
- ein Bedienelement (14), das für eine Anwendereingabe in die Steuereinrichtung (7) dient und das vom Anwender des elektrisch betreibbaren Geräts (70) während der Verwendung des elektrisch betreibbaren Geräts (70) händisch bedienbar ist, wobei das elektrisch betreibbare Gerät (70) umfasst:
- einen beweglich mit dem Basisabschnitt (1) gekoppelten Unterstützungsabschnitt (3) zur Unterstützung eines Körperteils, vorzugsweise einer Gliedmaße, insbesondere eines Arms (4), des menschlichen Körpers und
- wobei die Aktor- und/oder Antriebseinrichtung (501) eine auf den Unterstützungsabschnitt (3) wirkende, insbesondere pneumatische, Aktoreinrichtung (5) zur Bereitstellung einer Unterstützungskraft für den Körperteil ist, wobei das Bedienelement (14) über ein Pause-Eingabeelement (510) verfügt, über das das Exoskelett (20) in einen Pause-Zustand versetzbar ist, in dem die Unterstützungskraft abgeschaltet ist und das Exoskelett (20) weiterhin eingeschaltet ist.

2. Elektrisch betreibbares Gerät (70) nach Anspruch 1, wobei das Bedienelement (14) als händisch umgreifbares Handbedienelement ausgeführt ist.

3. Elektrisch betreibbares Gerät (70) nach einem voranstehenden Anspruch, wobei das Bedienelement (14) mehrere Eingabeelemente (502) aufweist, die derart angeordnet sind, dass alle Eingabeelemente (502) mit einer das Bedienelement (14) umgreifenden und dadurch haltenden Hand bedienbar sind, und/oder das Bedienelement (14) mehrere Eingabeelemente (502) aufweist, die an verschiedenen Seiten und/oder auf verschiedenen Flächen des Bedienelements (14) angeordnet sind.

4. Elektrisch betreibbares Gerät (70) nach einem voranstehenden Anspruch, wobei das Bedienelement (14) mehrere Eingabeelemente (502) aufweist, die sich jeweils in ihrer Form, Größe, optischen und/oder haptischen Struktur voneinander unterscheiden.

5. Elektrisch betreibbares Gerät (70) nach einem voranstehenden Anspruch, wobei das Bedienelement (14) mehrere Anzeigeelemente (509) aufweist, die auf derselben Seite des Bedienelements angeordnet sind, wobei jedes Anzeigeelement (509) zur Anzeige einer anderen Anzeigeinformation dient.

6. Elektrisch betreibbares Gerät (70) nach einem voranstehenden Anspruch, ferner umfassend einen Drucklufttank (25) zur Bereitstellung von Druckluft für die Aktoreinrichtung (5), wobei das elektrisch betreibbare Gerät (70) ausgebildet ist, im Pause-Zustand einen für eine Betätigung der Aktoreinrichtung (5) benötigten Versorgungsdruck im Drucklufttank (25) aufrechtzuerhalten.

7. Elektrisch betreibbares Gerät nach einem voranstehenden Anspruch , wobei die Steuereinrichtung (7) ausgebildet ist, bei einem Verlassen des Pause-Zustands die Unterstützungskraft gemäß einem vor Einnahme des Pause-Zustands festgelegten Kraftniveaus einzustellen.

8. Elektrisch betreibbares Gerät (70) nach einem voranstehenden Anspruch, wobei die Steuereinrichtung (7) über wenigstens zwei manuell und/oder automatisch auswählbare Presets verfügt, die jeweils über wenigstens eine Preset-Charakteristik verfügen, die eine Unterstützungskraft-Vorgabe in Abhängigkeit von wenigstens einer Eingangsgröße, insbesondere einer Stellung des Unterstützungsabschnitts, festlegt, wobei sich die wenigstens zwei Presets in ihrer Preset-Charakteristik unterscheiden, und wobei die Steuereinrichtung (7) ausgebildet ist, unter Verwendung eines aus den wenigstens zwei Presets ausgewählten Presets die Unterstützungskraft-Vorgabe in Abhängigkeit von der Eingangsgröße zu ermitteln und die Unterstützungskraft auf Basis der Unterstützungskraft-Vorgabe einzustellen.

9. Elektrisch betreibbares Gerät (70) nach Anspruch 8, wobei die Steuereinrichtung (7) ausgebildet ist, bei Verlassen des Pause-Zustands die Unterstützungskraft auf Basis eines vor Einnahme des Pause-Zustands ausgewählten Presets einzustellen.

10. Elektrisch betreibbares Gerät (70) nach Anspruch 8 oder 9, wobei das Bedienelement (14) ferner über ein Preset-Auswahl-Eingabeelement (511) verfügt, mit dem wenigstens eines der Presets auswählbar ist, und/oder das Bedienelement ferner über ein Preset-Konfigurations-Eingabeelement verfügt, mit dem wenigstens eine Preset-Charakteristik konfigurierbar ist.

11. Elektrisch betreibbares Gerät (70) nach einem voranstehenden Anspruch, wobei die Steuereinrichtung (7) ausgebildet ist, die Unterstützungskraft in Abhängigkeit von einer Eingangsgröße, insbesondere einer Stellung des Unterstützungsabschnitts (3), einzustellen, und das Bedienelement (14) ein Unterstützungsbereich-Anzeigeelement (512) aufweist und das Exoskelett (20) ausgebildet ist, über das Unterstützungsbereich-Anzeigeelement (512) einen Unterstützungsbereich der Eingangsgröße anzuzeigen, in dem die Unterstützungskraft bereitgestellt wird.

12. Elektrisch betreibbares Gerät (70) nach einem voranstehenden Anspruch, wobei das Bedienelement (14) ferner ein Unterstützungskraft-Anzeigeelement (514) umfasst, wobei das Exoskelett (20) ausgebildet ist, über das Unterstützungskraft-Anzeigeelement (514) ein Kraftniveau der Unterstützungskraft anzuzeigen, und/oder das Bedienelement (14) über ein als Drehrad ausgebildetes Unterstützungskraft-Eingabeelement (515) verfügt, über das das Kraftniveau der Unterstützungskraft einstellbar ist.

13. Elektrisch betreibbares Gerät (70) nach einem voranstehenden Anspruch, wobei das Bedienelement (14) mit dem Basisabschnitt (1) des Exoskeletts (20) über ein Kabel verbunden ist, wobei das Kabel vorzugsweise formstabil ausgeführt ist und vorzugsweise über eine ausreichend hohe Biegesteifigkeit verfügt, so dass das Bedienelement durch das Kabel aufgrund der Biegesteifigkeit des Kabels an einer Position im Raum gehalten wird.

14. Verfahren zum Betreiben eines elektrisch betreibbaren Geräts (70) nach einem der voranstehenden Ansprüche, umfassend den Schritt:
- Durchführen der Anwendereingabe mittels des Bedienelements (14) .

15. Verfahren nach Anspruch 14, umfassend die Schritte:
- wenn sich das Exoskelett (20) nicht in dem Pause-Zustand befindet, Betätigen des Pause-Eingabeelement (510), wodurch das Exoskelett (20) in den Pause-Zustand versetzt wird, und/oder
- wenn sich das Exoskelett (20) in dem Pause-Zustand befindet, Betätigen des Pause-Eingabeelement (510), wodurch das Exoskelett (20) den Pause-Zustand verlässt.

## Claims

1. Electrically operable device (70), which is designed as an exoskeleton (20), comprising:
- a base section (1) for attachment to a body section, in particular the torso (2), of the human body,
- an actuator and/or drive device (501),
- a control device (7) for controlling the actuator and/or drive device (501), and
- an operating element (14) which is used for user input into the control device (7) and which can be operated manually by the user of the electrically operable device (70) during use of the electrically operable device (70), wherein the electrically operable device (70) comprises:
- a support section (3) movably coupled to the base section (1) for supporting a body part, preferably a limb, in particular an arm (4), of the human body, and
- wherein the actuator and/or drive device (501) is an actuator device (5), in particular a pneumatic actuator device, acting on the support section (3) for providing a support force for the body part, wherein the operating element (14) has a pause input element (510) via which the exoskeleton (20) can be set to a pause state in which the support force is switched off and the exoskeleton (20) is still switched on.

2. Electrically operable device (70) according to claim 1, wherein the operating element (14) is designed as a manually grippable manual operating element.

3. Electrically operable device (70) according to a preceding claim, wherein the operating element (14) has a plurality of input elements (502) which are arranged in such a way that all input elements (502) can be operated by a hand grasping the operating element (14) and thereby holding it, and/or the operating element (14) has a plurality of input elements (502) which are arranged on different sides and/or on different surfaces of the operating element (14).

4. Electrically operable device (70) according to a preceding claim, wherein the operating element (14) has a plurality of input elements (502), each of which differs from one another in its shape, size, optical and/or haptic structure.

5. Electrically operable device (70) according to a preceding claim, wherein the operating element (14) comprises a plurality of indicator elements (509) arranged on the same side of the operating element, each indicator element (509) serving to display a different indicator information.

6. Electrically operable device (70) according to a preceding claim, further comprising a compressed air tank (25) for providing compressed air for the actuator device (5), wherein the electrically operable device (70) is configured to maintain, in the pause state, a supply pressure in the compressed air tank (25), the supply pressure being required for actuation of the actuator device (5).

7. Electrically operable device according to a preceding claim, wherein the control device (7) is configured to set, when leaving the pause state, the support force according to a force level determined before entering the pause state.

8. Electrically operable device (70) according to a preceding claim, wherein the control device (7) has at least two manually and/or automatically selectable presets, each of which has at least one preset characteristic which defines a support force specification as a function of at least one input variable, in particular a position of the support section, wherein the at least two presets differ in their preset characteristic, and wherein the control device (7) is configured to determine the support force specification as a function of the input variable using a preset selected from the at least two presets and to set the support force on the basis of the support force specification.

9. Electrically operable device (70) according to claim 8, wherein the control device (7) is configured to set, when leaving the pause state, the support force on the basis of a preset selected before entering the pause state.

10. Electrically operable device (70) according to claim 8 or 9, wherein the operating element (14) further comprises a preset selection input element (511) with which at least one of the presets can be selected, and/or the operating element further comprises a preset configuration input element with which at least one preset characteristic can be configured.

11. Electrically operable device (70) according to a preceding claim, wherein the control device (7) is configured to set the support force as a function of an input variable, in particular a position of the support section (3), and the operating element (14) has a support range indicator element (512) and the exoskeleton (20) is designed to display, via the support range indicator element (512), a support range of the input variable in which the support force is provided.

12. Electrically operable device (70) according to a preceding claim, wherein the operating element (14) further comprises a support force indicator element (514), wherein the exoskeleton (20) is configured to indicate a force level of the support force via the support force indicator element (514), and/or the operating element (14) has a support force input element (515) in the form of a rotary wheel, via which the force level of the support force can be adjusted.

13. Electrically operable device (70) according to a preceding claim, wherein the operating element (14) is connected to the base section (1) of the exoskeleton (20) via a cable, wherein the cable is preferably dimensionally stable and preferably has a sufficiently high bending stiffness so that the operating element is held in a position in space by the cable due to the bending stiffness of the cable.

14. Method of operating an electrically operable device (70) according to a preceding claim, comprising the step of:
- carrying out the user input using the operating element (14).

15. Method according to claim 14, comprising the steps of:
- when the exoskeleton (20) is not in the pause state, actuating the pause input element (510), whereby the exoskeleton (20) is set to the pause state, and/or
- when the exoskeleton (20) is in the pause state, actuating the pause input element (510), causing the exoskeleton (20) to leave the pause state.

## Revendications

1. Appareil (70) à fonctionnement électrique, qui est réalisé sous forme d'exosquelette (20), comprenant :
- une section de base (1) destinée à être installée sur une partie du corps, en particulier le torse (2), du corps humain,
- un dispositif d'actionneur et/ou d'entraînement (501),
- un dispositif de commande (7) destiné à piloter le dispositif d'actionneur et/ou d'entraînement (501), et
- un élément d'utilisation (14), qui sert à une entrée d'utilisateur dans le dispositif de commande (7) et qui peut être commandé manuellement par l'utilisateur de l'appareil (70) à fonctionnement électrique pendant l'utilisation de l'appareil (70) à fonctionnement électrique, dans lequel l'appareil (70) à fonctionnement électrique comprend :
- une section de support (3) couplée de manière mobile à la section de base (1), destinée à soutenir une partie du corps, de préférence un membre, en particulier un bras (4), du corps humain et
- dans lequel le dispositif d'actionneur et/ou d'entraînement (501) est un dispositif d'actionneur (5) agissant sur la section de support (3), en particulier pneumatique, pour fournir une force de support à la partie du corps, dans lequel l'élément d'utilisation (14) dispose d'un élément d'entrée de pause (510) par l'intermédiaire duquel l'exosquelette (20) peut être amené dans un état de pause dans lequel la force de support est désactivée et l'exosquelette (20) reste activé.

2. Appareil (70) à fonctionnement électrique selon la revendication 1, dans lequel l'élément d'utilisation (14) est réalisé comme un élément d'utilisation manuelle pouvant être saisi à la main.

3. Appareil (70) à fonctionnement électrique selon une revendication précédente, dans lequel l'élément d'utilisation (14) présente plusieurs éléments d'entrée (502) qui sont disposés de telle manière que tous les éléments d'entrée (502) peuvent être commandés avec une main enserrant et maintenant ainsi l'élément d'utilisation (14), et/ou l'élément d'utilisation (14) présente plusieurs éléments d'entrée (502) qui sont disposés sur différents côtés et/ou sur différentes surfaces de l'élément d'utilisation (14).

4. Appareil (70) à fonctionnement électrique selon une revendication précédente, dans lequel l'élément d'utilisation (14) présente plusieurs éléments d'entrée (502) qui se différencient respectivement par leur forme, leur taille, leur structure optique et/ou haptique.

5. Appareil (70) à fonctionnement électrique selon une revendication précédente, dans lequel l'élément d'utilisation (14) présente plusieurs éléments d'affichage (509) qui sont disposés sur le même côté de l'élément d'utilisation, dans lequel chaque élément d'affichage (509) sert à afficher une autre information d'affichage.

6. Appareil (70) à fonctionnement électrique selon une revendication précédente, comprenant en outre un réservoir (25) d'air comprimé pour la mise à disposition d'air comprimé pour le dispositif d'actionneur (5), dans lequel l'appareil (70) à fonctionnement électrique est réalisé pour maintenir à l'état de pause une pression d'alimentation nécessaire pour un actionnement du dispositif d'actionneur (5) dans le réservoir (25) d'air comprimé.

7. Appareil à fonctionnement électrique selon une revendication précédente, dans lequel le dispositif de commande (7) est réalisé pour régler la force de support en fonction d'un niveau de force fixé avant l'entrée dans l'état de pause lors de la sortie de l'état de pause.

8. Appareil (70) à fonctionnement électrique selon la revendication précédente, dans lequel le dispositif de commande (7) dispose d'au moins deux préréglages pouvant être sélectionnés manuellement et/ou automatiquement qui disposent chacun d'au moins une caractéristique de préréglage qui fixe une consigne de force de support en fonction d'au moins une grandeur d'entrée, en particulier d'une position de la section de support, dans lequel les au moins deux préréglages sont différents dans leur caractéristique de préréglage, et dans lequel le dispositif de commande (7) est réalisé pour régler la consigne de force de support en fonction de la grandeur d'entrée et pour régler la force de support sur la base de la prescription de force de support en utilisant un préréglage sélectionné parmi les au moins deux préréglages.

9. Appareil (70) à fonctionnement électrique selon la revendication 8, dans lequel le dispositif de commande (7) est réalisé pour régler la force de support, lors de la sortie de l'état de pause, sur la base d'un préréglage sélectionné avant l'entrée dans l'état de pause.

10. Appareil (70) à fonctionnement électrique selon la revendication 8 ou 9, dans lequel l'élément d'utilisation (14) dispose en outre d'un élément d'entrée de sélection de préréglage (511) qui permet de sélectionner au moins un des préréglages et/ou l'élément d'utilisation dispose en outre d'un élément d'entrée de configuration de préréglage qui permet de configurer au moins une caractéristique de préréglage.

11. Appareil (70) à fonctionnement électrique selon une revendication précédente, dans lequel le dispositif de commande (7) est réalisé pour régler la force de support en fonction d'une grandeur d'entrée, en particulier d'une position de la section de support (3), et l'élément d'utilisation (14) présente un élément d'affichage de zone de support (512) et l'exosquelette (20) est réalisé pour afficher une zone de support de la grandeur d'entrée par l'intermédiaire de l'élément d'affichage de zone de support (512), dans laquelle la force de support est fournie.

12. Appareil (70) à fonctionnement électrique selon une revendication précédente, dans lequel l'élément d'utilisation (14) comprend en outre un élément d'affichage de force de support (514), dans lequel l'exosquelette (20) est réalisé pour afficher un niveau de force de force de support par l'intermédiaire de l'élément d'affichage de force de support (514), et/ou l'élément d'utilisation (14) dispose d'un élément d'entrée de force de support (515) réalisé en tant que molette, par l'intermédiaire duquel le niveau de force de la force de support peut être réglé.

13. Appareil (70) à fonctionnement électrique selon une revendication précédente, dans lequel l'élément d'utilisation (14) est relié à la section de base (1) de l'exosquelette (20) par l'intermédiaire d'un câble, dans lequel le câble est de préférence de forme stable et dispose de préférence d'une rigidité à la flexion suffisamment élevée, de sorte que l'élément d'utilisation est maintenu par le câble dans une position dans l'espace en raison de la rigidité à la flexion du câble.

14. Procédé pour faire fonctionner un appareil (70) à fonctionnement électrique selon l'une quelconque des revendications précédentes, comprenant l'étape :
- de réalisation de l'entrée d'utilisateur au moyen de l'élément d'utilisation (14).

15. Procédé selon la revendication 14, comprenant les étapes :
- si l'exosquelette (20) n'est pas dans l'état de pause, d'actionnement de l'élément d'entrée de pause (510), ce qui permet d'amener l'exosquelette (20) dans l'état de pause, et/ou
- lorsque l'exosquelette (20) est dans l'état de pause, d'actionnement de l'élément d'entrée de pause (510), ce qui permet de sortir l'exosquelette (20) de l'état de pause.
